# EUROPÄISCHE PATENTSCHRIFT

(11) **EP 1 431 356 B1**
(45) Veröffentlichungstag und Bekanntmachung des Hinweises auf die Patenterteilung: **13.05.2015**
(21) Anmeldenummer: 03029253.6
(22) Anmeldetag: 18.12.2003
(51) Int. Cl.: C09D 151/10, C08K 3/00

(54) **Verwendung wässriger Dispersionen aus Polymerisat und feinteiligem anorganischen Feststoff zur Grundierung mineralischer Untergründe**
Use of aqueous dipersion of particles made up of polymerisate and fine inorganic solid material for priming mineral substrates
Utilisation d'une dispersion aqueuse de particules constituées de polymère et de substance solide minérale à fines particules ,couche de fond destinée à des support minéraux

(30) Priorität: 20.12.2002 DE 10260337
(43) Veröffentlichungstag der Anmeldung: 23.06.2004
(73) Patentinhaber: BASF SE, 67056 Ludwigshafen (DE)
(72) Erfinder: Wiese, Harm, Dr., 69121 Heidelberg (DE); Centner, Alexander, Dr., 67127 Rödersheim-Gronau (DE); Kirsch, Stefan, Dr., 55262 Heidesheim (DE); Schmidt, Marco, 67346 Speyer (DE); Pietsch, Ines, Dr., 67346 Speyer (DE); Laubender, Matthias, Dr., 67105 Schifferstadt (DE)

(56) Entgegenhaltungen:
- EP-A- 1 004 587
- WO-A-85/01511
- DE-A1- 19 517 346
- DATABASE WPI Section Ch, Week 199816 Derwent Publications Ltd., London, GB; Class A82, AN 1998-175094 XP002356718 & JP 10 036617 A (DAICEL CHEM IND LTD) 10. Februar 1998 (1998-02-10)

## Beschreibung

Die Erfindung betrifft die Verwendung wässriger Dispersionen aus Polymerisat und feinteiligem anorganischem Feststoff zur Grundierung glasartiger Untergründe. Dabei kann die Dispersion aus Polymerisat und feinteiligem anorganischem Feststoff aufgebaute Partikel oder Gemische von Polymerisatpartikeln und feinteiligem anorganischem Feststoff enthalten.

Wässrige Dispersionen von Kompositpartikeln sind allgemein bekannt. Es handelt sich um fluide Systeme, die als disperse Phase in wässrigem Dispergiermedium aus Polymerisatknäueln mit mehreren ineinander verschlungenen Polymerisatketten, der sogenannten Polymermatrix, und feinteiligem anorganischem Feststoff aufgebaute Partikel in disperser Verteilung befindlich enthalten. Der Durchmesser der Kompositpartikel liegt häufig im Bereich von 30 nm bis 5000 nm.

Ebenso wie Polymerisatlösungen beim Verdampfen des Lösungsmittels und wässrige Polymerisatdispersionen beim Verdampfen des wässrigen Dispergiermediums, weisen wässrige Dispersionen von Kompositpartikeln das Potential zur Ausbildung von modifizierten, feinteiligen anorganischen Feststoff enthaltenden Polymerisatfilmen auf, weshalb sie insbesondere als modifizierte Bindemittel, z.B. für Anstrichfarben oder für Massen zum Beschichten von Leder, Papier oder Kunststofffolien von Interesse sind. Die aus wässrigen Dispersionen von Kompositpartikeln prinzipiell zugänglichen Kompositpartikelpulver sind darüber hinaus auch als Additive für Kunststoffe, Komponenten für Tonerformulierungen oder Zusatzstoffe in elektrophotographischen Anwendungen von Interesse.

JP-A-06-199917 betrifft eine wässrige Dispersionszusammensetzung, die als Beschichtung eingesetzt werden kann. Bei ihrer Herstellung wird ein Gemisch ethylenisch ungesättigter Monomere mit kolloidalem Siliciumdioxid gemischt und in einer wässrigen Dispersion polymerisiert. Unter den ethylenisch ungesättigten Monomeren sind auch solche enthalten, die Hydroxylgruppen aufweisen. Beispielsweise wird 2-Hydroxyethyl(meth)acrylat als Monomer eingesetzt. Es wird angegeben, dass die Filme eine gute Anhaftung an mineralische Untergründe haben und eine geringe Dampfdurchlässigkeit und eine Barrierewirkung für Flüssigkeiten zeigen. Das kolloidale Siliciumdioxid kann mit Teilchendurchmessern von 4 bis 100 nm eingesetzt werden.

JP-A2-100 36 617 betrifft eine wässrige Emulsionsprimer-Zusammensetzung für Zement. Die Zusammensetzung wird insbesondere zum Aufbringen von Zement auf Beton als Untergrund eingesetzt. Bei der Zusammensetzung handelt es sich um eine Abmischung aus einer Polymerdispersion mit Siliciumdioxidteilchen. Dazu wird zunächst die Polymerdispersion unter Einsatz von Vinyltrimethoxysilan-Monomeren hergestellt. Als weitere Monomere werden beispielsweise Styrol, Butylacrylat und Methacrylsäure eingesetzt.

Die bisher bekannten Systeme eignen sich nicht immer in ausreichender Weise zur Grundierung mineralischer Untergründe, insbesondere glasartiger Untergründe.

Aufgabe der vorliegenden Erfindung ist die Bereitstellung von wässrigen Dispersionen, die insbesondere zur Grundierung mineralischer Untergründe, speziell glasartiger Untergründe geeignet sind. Die Grundierungen sollen eine sehr gute Adhäsion zu Glas zeigen und eine hohe Festigkeit des Films aufweisen.

Die Aufgabe wird erfindungsgemäß gelöst durch Verwendung von wässrigen Dispersionen von aus Polymerisat und feinteiligem anorganischem Feststoff aufgebauten Kompositpartikeln, die durch radikalische Emulsionspolymerisation eines Gemisches ethylenisch ungesättigter Monomeren, das mindestens ein ethylenisch ungesättigtes Alkoxysilanmonomer enthält, in einem wässrigen Medium im Beisein eines dispers verteilten, feinteiligen anorganischen Feststoffs und mindestens eines Dispergiermittels erhältlich sind, zur Grundierung glasartiger Untergründe, wobei der feinteilige anorganische Feststoff so beschaffen ist, dass die im wässrigen Reaktionsmedium dispergierten Feststoffteilchen einen Teilchendurchmesser von ≤ 100 nm aufweisen und die Ermittlung der Teilchendurchmesser über die Methode der Analytischen Ultrazentrifuge erfolgt (vgl. hierzu S. E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). ,

Die Aufgabe wird erfindungsgemäß ferner gelöst durch Verwendung von wässrigen Dispersionen, erhältlich durch Abmischen eines Polymerisats, das durch radikalische Emulsionspolymerisation eines Gemisches ethylenisch ungesättigter Monomeren, das mindestens ein ethylenisch ungesättigtes Alkoxysilanmonomer enthält, in einem wässrigen Medium erhältlich ist, mit einem dispers verteilten, feinteiligen anorganischen Feststoff in Gegenwart mindestens eines Dispergiermittels, zur Grundierung glasartiger Untergründe, wobei der feinteilige anorganische Feststoff so beschaffen ist, dass die im wässrigen Reaktionsmedium dispergierten Feststoffteilchen einen Teilchendurchmesser von ≤ 100 nm aufweisen und die Ermittlung der Teilchendurchmesser über die Methode der Analytischen Ultrazentrifuge erfolgt (vgl. hierzu S. E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Dabei sind die ethylenisch ungesättigten Alkoxysilanmonomere vorzugsweise ausgewählt aus Trialkoxysilanen mit Vinyl-, Acryloxy- oder Methacryloxy-Gruppen als ethylenisch ungesättigten Gruppen.

Als bevorzugte Siloxangruppen enthaltende Monomere sind Vinyltrialkoxysilane, beispielsweise Vinyltrimethoxysilan, Alkylvinyldialkoxysilane, Acryloxyalkyltrialkoxysilane, oder Methacryloxyalkyltrialkoxysilane, wie beispielsweise Acryloxyethyltrimethoxysilan, Methacryloxyethyltrimethoxysilan, Acryloxypropyltrimethoxysilan oder Methacryloxypropyltrimethoxysilan einsetzbar.

Weitere Beispiele derartiger Monomere sind Methacryloxypropyltrimethoxysilan, Vinyltrimethoxysilan, Vinyltriethoxysilan, Vinylacetoxysilan, Vinyltris(β-methoxyethoxy)silan, γ-Methacryloxypropylmethyldimethoxysilan, Acryloxypropyldimethoxysilan, N-β-(vinylbenzylaminoethyl)γ-aminopropyltrimethoxysilan und Gemische davon.

Bezogen auf die zur Herstellung der Polymerisate eingesetzten ethylenisch ungesättigten Monomere werden die ethylenisch ungesättigten Alkoxysilan-Monomere vorzugsweise in einem Anteil von 0,05 bis 10 Gew.-%, vorzugsweise 0,05 bis 3 Gew.-%, insbesondere 0,1 bis 1 Gew.-% eingesetzt.

Es wurde erfindungsgemäß gefunden, dass die vorstehend angegebenen und im nachfolgenden detaillierter beschriebenen wässrigen Dispersionen besondere Vorteile bei der Grundierung glasartiger Untergründe zeigen. Als mineralische Untergründe werden Untergründen bezeichnet, die sich von anorganischen, gesteinsbildenden Mineralien ableiten. Hierbei kann es sich um Sulfide, Halogenide, Oxide/Hydroxide, Carbonate, Nitrate, Borate, Sulfate, Chromate, Molybdate, Wolframate, Phosphate, Arsenate, Vanadate oder Silikate handeln. Vorzugsweise handelt es sich um Silikate. Als mineralische Untergründe werden solche Untergründe angesehen, die zu mindestens 50 Gew.-% aus mineralischen Materialien bestehen. Vorzugsweise bestehen sie zu mindestens 80 Gew.-%, insbesondere vollständig aus Mineralien.

Unter "glasartigen Untergründen" werden solche Untergründe verstanden, die überwiegend aus anorganischen Gläsern aufgebaut sind. Bezogen auf den gesamten glasartigen Untergrund beträgt der Anteil an anorganischem Glas vorzugsweise mindestens 80 %, besonders bevorzugt mindestens 95 %. Speziell bevorzugt ist der glasartige Untergrund nur aus anorganischem Glas aufgebaut. Es handelt sich dabei um ein oxidisches Schmelzprodukt auf Basis von Silikaten. Mögliche Inhaltsstoffe des Glases sind insbesondere Siliciumdioxid, Kalziumoxid, Natriumoxid, Bortrioxid, Aluminiumoxid, Bleioxid, Magnesiumoxid, Bariumoxid, Kaliumoxid und weitere Zusätze. Es kann hierzu auf Römpp, Chemie Lexikon, 9. Auflage, Stichwort "Glas" verwiesen werden. Dort sind in Tabelle 1 unterschiedliche Glaszusammensetzungen beispielhaft angegeben. Insbesondere handelt es sich bei den glasartigen Untergründen um glasierte Fliesen.

Der Ausdruck "Grundierung" bezeichnet einen Auftrag auf die mineralischen, insbesondere glasartigen Untergründe, als Zwischenschicht und Haftschicht. Die Grundierung soll dabei insbesondere eine gute Anhaftung (Adhäsion) an Glas zeigen.

Es wurde erfindungsgemäß gefunden, dass die beschriebenen Polymer-/Anorganik-Nanokomposit-Dispersionen zu besonders vorteilhaften Grundierungen glasartiger Untergründe führen. Die Dispersionen lassen sich dabei lösemittelfrei anwenden und zeigen gegenüber bekannten Polymerdispersionen Vorteile in der Haftung und im Weißanlaufen. Diese vorteilhaften Eigenschaften lassen sich auch durch Abmischungen von Polymerdispersionen mit den feinteiligen anorganischen Feststoffen, insbesondere Silika-Solen, erreichen. Die Haftung insbesondere zu glasartigen oder silikatischen Untergründen ist auch nach kurzzeitiger Wasserlagerung gegenüber bekannten Dispersionen deutlich verbessert. Im Unterschied zum Stand der Technik steht erfindungsgemäß die Haftung zum Untergrund im Vordergrund und nicht der Schutz des Untergrundes oder eine Wasserdampfsperre.

Die Haftung kann insbesondere durch Gitterschnitt-Tests geprüft werden.

In der DE-A-199 42 777 wird ein Verfahren zur Herstellung von wässrigen Kompositpartikeldispersionen beschrieben, bei dem die dispergierten anorganischen Feststoffteilchen und die bei der radikalisch initiierten wässrigen Emulsionspolymerisation eingesetzten radikalerzeugenden und/oder dispergierend wirkenden Komponenten entgegengesetzte Ladungen aufweisen.

In der DE-A-100 00 281 wird ein Verfahren zur Herstellung von wässrigen Kompositpartikeldispersionen beschrieben, bei dem die dispergierten anorganischen Feststoffteilchen eine von Null verschiedene elektrophoretische Mobilität aufweisen und bei dem bei der wässrigen Emulsionspolymerisation spezielle Comonomere eingesetzt werden.

Zur Herstellung der wässrigen Dispersion wird vorzugsweise in Gegenwart wenigstens eines anionischen, kationischen und nichtionischen Dispergiermittels nach der Methode der radikalisch wässrigen Emulsionspolymerisation polymerisiert, wobei
a) eine stabile wässrige Dispersion des wenigstens einen anorganischen Feststoffs eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen Durchmesser ≤ 100 nm aufweisen,
b) die dispergierten Feststoffteilchen des wenigstens einen anorganischen Feststoffs in einer wässrigen Standardkaliumchlorid-Lösung bei einem pH-Wert, der dem pH-Wert des wässrigen Reaktionsmediums vor Beginn der Zugabe der Dispergiermittel entspricht, eine von Null verschiedene elektrophoretische Mobilität zeigen,
c) die wässrige Feststoffteilchendispersion vor Beginn der Zugabe des Gemisches der ethylenisch ungesättigten Monomeren mit wenigstens einem anionischen, kationischen und nichtionischen Dispergiermittel versetzt wird,
d) danach 0,01 bis 30 Gew.-% der Gesamtmenge des Gemisches der Monomeren der wässrigen Feststoffteilchendispersion zugesetzt und bis zu einem Umsatz von wenigstens 90 % polymerisiert wird
   und
e) daran anschließend die Restmenge des Gemisches der Monomeren unter Polymerisationsbedingungen nach Maßgabe des Verbrauchs zugegeben wird.

Für die Herstellung sind alle diejenigen feinteiligen anorganischen Feststoffe geeignet, welche stabile wässrige Dispersionen ausbilden, die bei einer Anfangsfeststoffkonzentration von ≥ 1 Gew.-%, bezogen auf die wässrige Dispersion des wenigstens einen anorganischen Feststoffs, noch eine Stunde nach ihrer Herstellung ohne Rühren oder Schütteln mehr als 90 Gew.-% des ursprünglich dispergierten Feststoffes in dispergierter Form enthalten und deren dispergierten Feststoffteilchen einen Durchmesser ≤ 100 nm aufweisen und darüber hinaus bei einem pH-Wert, der dem pH-Wert des wässrigen Reaktionsmediums vor Beginn der Zugabe der Dispergiermittel entspricht, eine von Null verschiedene elektrophoretische Mobilität zeigen.

Die quantitative Bestimmung der Anfangsfeststoffkonzentration und der Feststoffkonzentration nach einer Stunde sowie die Ermittlung der Teilchendurchmesser erfolgt über die Methode der Analytischen Ultrazentrifuge (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Die bei den Teilchendurchmesser angegebenen Werte entsprechen den sogenannten d₅₀-Werten.

Als erfindungsgemäß einsetzbare feinteilige anorganische Feststoffe sind Metalle, Metallverbindungen, wie Metalloxide und Metallsalze aber auch Halbmetall- und Nichtmetallverbindungen geeignet. Als feinteilige Metallpulver können Edelmetallkolloide, wie beispielsweise Palladium, Silber, Ruthenium, Platin, Gold und Rhodium sowie diese enthaltende Legierungen eingesetzt werden. Als feinteilige Metalloxide beispielhaft genannt seien Titandioxid (beispielsweise kommerziell verfügbar als Hombitec®-Marken der Fa. Sachtleben Chemie GmbH), Zirkonium-(IV)-oxid, Zinn-(II)-oxid, Zinn-(IV)-oxid (beispielsweise kommerziell verfügbar als Nyacol^{®} SN-Marken der Fa. Akzo-Nobel), Aluminiumoxid (beispielsweise kommerziell verfügbar als Nyacol^{®} AL-Marken der Fa. Akzo-Nobel), Bariumoxid, Magnesiumoxid, verschiedene Eisenoxide, wie Eisen-(II)-oxid (Wuestit), Eisen-(III)-oxid (Hämatit) und Eisen-(II/III)-oxid (Magnetit), Chrom-(III)-oxid, Antimon-(III)-oxid, Wismut-(III)-oxid, Zinkoxid (beispielsweise kommerziell verfügbar als Sachtotec^{®}-Marken der Fa. Sachtleben Chemie GmbH), Nickel-(II)-oxid , Nickel-(III)-oxid, Cobalt-(II)-oxid, Cobalt-(III)-oxid, Kupfer-(II)-oxid, Yttrium- (III)-oxid (beispielsweise kommerziell verfügbar als Nyacol® YTTRIA-Marken der Fa. Akzo-Nobel), Cer-(IV)-oxid (beispielsweise kommerziell verfügbar als Nyacol® CEO2-Marken der Fa. Akzo-Nobel) amorph und/oder in ihren unterschiedlichen Kristallmodifikationen sowie deren Hydroxyoxide, wie beispielsweise Hydroxytitan- (IV)-oxid, Hydroxyzirkonium-(IV)-oxid, Hydroxyaluminiumoxid (beispielsweise kommerziell verfügbar als Disperal^{®}-Marken der Fa. Condea-Chemie GmbH) und Hydroxyeisen-(III)-oxid amorph und/oder in ihren unterschiedlichen Kristallmodifikationen. Folgende amorphen und/oder in ihren unterschiedlichen Kristallstrukturen vorliegenden Metallsalze sind erfindungsgemäß prinzipiell einsetzbar: Sulfide, wie Eisen-(II)-sulfid, Eisen- (III)-sulfid, Eisen-(II)-disulfid (Pyrit), Zinn-(II)-sulfid, Zinn-(IV)-sulfid, Quecksilber-(II)-sulfid, Cadmium-(II)-sulfid, Zinksulfid, Kupfer-(II)-sulfid, Silbersulfid, Nickel-(II)-sulfid, Cobalt-(II)-sulfid, Cobalt-(III)-sulfid, Mangan-(II)-sulfid, Chrom-(III)-sulfid, Titan-(II)-sulfid, Titan-(III)-sulfid, Titan-(IV)-sulfid, Zirkon-(IV)-sulfid, Antimon-(III)-sulfid, Wismut-(III)-sulfid, Hydroxide, wie Zinn-(II)-hydroxid, Aluminiumhydroxid, Magnesiumhydroxid, Calciumhydroxid, Bariumhydroxid, Zinkhydroxid, Eisen-(II)-hydroxid, Eisen-(III)-hydroxid, Sulfate, wie Calciumsulfat, Strontiumsulfat, Bariumsulfat, Blei-(IV)-sulfat, Carbonate, wie Lithiumcarbonat, Magnesiumcarbonat, Calciumcarbonat, Zinkcarbonat, Zirkonium-(IV)-carbonat, Eisen-(II)-carbonat, Eisen-(III)-carbonat, Orthophosphate, wie Lithiumorthophosphat, Calciumorthophosphat, Zinkorthophosphat, Magnesiumorthophosphat, Aluminiumorthophosphat, Zinn-(III)-orthophosphat, Eisen-(II)-orthophosphat, Eisen-(III)-orthophosphat, Metaphosphate, wie Lithiummetaphosphat, Calciummetaphosphat, Aluminiummetaphosphat, Pyrophosphate, wie Magnesiumpyrophosphat, Calciumpyrophosphat, Zinkpyrophosphat, Eisen-(III)-pyrophosphat, Zinn-(II)-pyrophosphat, Ammoniumphosphate, wie Magnesiumammoniumphosphat, Zinkammoniumphosphat, Hydroxylapatit [Ca₅{(PO₄)₃OH}], Orthosilikate, wie Lithiumorthosilikat, Calcium-/Magnesiumorthosilikat, Aluminiumorthospikat, Eisen-(II)-orthosilikat, Eisen-(III)-orthosilikat,Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat und Natriummagnesiumsilikat insbesondere in spontan delaminierender Form, wie beispielsweise Optigel^{®} SH (Marke der Südchemie AG), Saponit^{®} SKS-20 und Hektorit^{®} SKS 21 (Marken der Hoechst AG) sowie Laponite^{®} RD und Laponite^{®} GS (Marken der Laporte Industries Ltd.), Aluminate, wie Lithiumaluminat, Calciumaluminat, Zinkaluminat, Borate, wie Magnesiummetaborat, Magnesiumorthoborat, Oxalate, wie Calciumoxalat, Zirkonium-(IV)-oxalat, Magnesiumoxalat, Zinkoxalat, Aluminiumoxalat, Tartrate, wie Calciumtartrat, Acetylacetonate, wie Aluminiumacetylacetonat, Eisen-(III)-acetylacetonat, Salicylate, wie Aluminiumsalicylat, Citrate, wie Calciumcitrat, Eisen-(II)-citrat, Zinkcitrat, Palmitate, wie Aluminiumpalmitat, Calciumpalmitat, Magnesiumpalmitat, Stearate, wie Aluminiumstearat, Calciumstearat, Magnesiumstearat, Zinkstearat, Laurate, wie Calciumlaurat, Linoleate, wie Calciumlinoleat, Oleate, wie Calciumoleat, Eisen-(II)-oleat oder Zinkoleat.

Als wesentliche erfindungsgemäß einsetzbare Halbmetallverbindung sei amorphes und/oder in unterschiedlichen Kristallstrukturen vorliegendes Siliziumdioxid genannt. Erfindungsgemäß geeignetes Siliziumdioxid ist kommerziell verfügbar und kann beispielsweise als Aerosil^{®} (Marke der Fa. Degussa AG), Levasil^{®} (Marke der Fa. Bayer AG), Ludox^{®} (Marke der Fa. DuPont), Nyacol^{®} und Bindzil^{®} (Marken der Fa. Akzo-Nobel) und Snowtex^{®} (Marke der Fa. Nissan Chemical Industries, Ltd.) bezogen werden. Erfindungsgemäß geeignete Nichtmetallverbindungen sind beispielsweise kolloidal vorliegender Graphit oder Diamant.

Als feinteilige anorganische Feststoffe sind solche besonders geeignet, deren Löslichkeit in Wasser bei 20°C und 1 bar (absolut) ≤ 1 g/l, bevorzugt ≤ 0,1 g/l und insbesondere ≤ 0,01 g/l ist. Besonders bevorzugt sind Verbindungen ausgewählt aus der Gruppe umfassend Siliziumdioxid, Aluminiumoxid, Zinn-(IV)-oxid, Yttrium- (III)-oxid, Cer-(IV)-oxid, Hydroxyaluminiumoxid, Calciumcarbonat, Magnesiumcarbonat, Calciumorthophosphat, Magnesiumorthophosphat, Calciummetaphospat, Magnesiummetaphosphat, Calciumpyrophosphat, Magnesiumpyrophosphat, Eisen-(II)-oxid, Eisen-(III)-oxid, Eisen-(II/III)-oxid, Titandioxid, Hydroxylapatit, Zinkoxid und Zinksulfid. Insbesondere bevorzugt sind Siliziumdioxid-Sole, welche eine elektrophoretische Mobilität mit negativem Vorzeichen aufweisen.

Vorteilhaft können auch die kommerziell verfügbaren Verbindungen der Aerosil^{®}-, Levasil^{®}-, Ludox^{®}-, Nyacol^{®}- und Bindzil^{®}-Marken (Siliziumdioxid), Disperal^{®}-Marken (Hydroxyaluminiumoxid), Nyacol^{®} AL-Marken (Aluminiumoxid), Hombitec^{®}-Marken (Titandioxid), Nyacol^{®} SN-Marken (Zinn-(IV)-oxid), Nyacol^{®} YTTRIA-Marken (Yttrium-(III)-oxid), Nyacol^{®} CEO2-Marken (Cer-(IV)-oxid) und Sachtotec^{®}-Marken (Zinkoxid) im erfindungsgemäßen Verfahren eingesetzt werden.

Die erfindungsgemäß einsetzbaren feinteiligen anorganischen Feststoffe sind vorzugsweise so beschaffen, dass die im wässrigen Reaktionsmedium dispergierten Feststoffteilchen einen Teilchendurchmesser von ≤ 100 nm aufweisen. Erfolgreich werden solche feinteiligen anorganischen Feststoffe eingesetzt, deren dispergierte Teilchen einen Teilchendurchmesser > 0 nm aber ≤ 90 nm, ≤ 80 nm, ≤ 70 nm, ≤ 60 nm, ≤ 50 nm, ≤ 40 nm, ≤ 30 nm, ≤ 20 nm oder ≤ 10 nm und alle Werte dazwischen aufweisen. Von Vorteil werden feinteilige anorganische Feststoffe eingesetzt, welche einen Teilchendurchmesser ≤ 50 nm aufweisen. Die Ermittlung der Teilchendurchmesser erfolgt über die Methode der Analytischen Ultrazentrifuge.

Die Zugänglichkeit feinteiliger Feststoffe ist dem Fachmann prinzipiell bekannt und erfolgt beispielsweise durch Fällungsreaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D.F. Evans, H. Wennerström in The Colloidal Domain, Seiten 363 bis 405, Verlag Chemie, Weinheim, 1994 und R.J. Hunter in Foundations of Colloid Science, Vol. I, Seiten 10 bis 17, Clarendon Press, Oxford, 1991).

Die Herstellung der stabilen Feststoffdispersion erfolgt häufig direkt bei der Synthese der feinteiligen anorganischen Feststoffe in wässrigem Medium oder alternativ durch Eindispergieren des feinteiligen anorganischen Feststoffs in das wässrige Medium. Abhängig vom Herstellweg der feinteiligen anorganischen Feststoffe gelingt dies entweder direkt, beispielsweise beim gefälltem oder pyrogenem Siliziumdioxid, Aluminiumoxid etc. oder unter Zuhilfenahme geeigneter Hilfsaggregate, wie beispielsweise Dispergatoren oder Ultraschallsonotroden.

Erfindungsgemäß sind jedoch nur solche feinteiligen anorganischen Feststoffe bevorzugt geeignet, deren wässrige Feststoffdispersion bei einer Anfangsfeststoffkonzentration von ≥ 1 Gew.-%, bezogen auf die wässrige Dispersion des feinteiligen anorganischen Feststoffs, noch eine Stunde nach ihrer Herstellung oder durch Aufrühren oder Aufschütteln der sedimentierten Feststoffe, ohne weiteres Rühren oder Schütteln mehr als 90 Gew.-% des ursprünglich dispergierten Feststoffes in dispergierter Form enthält und deren dispergierten Feststoffteilchen einen Durchmesser ≤ 100 nm aufweisen. Üblich sind Anfangsfeststoffkonzentrationen ≤ 60 Gew.-%. Vorteilhaft können jedoch auch Anfangsfeststoffkonzentrationen ≤ 55 Gew.-%, ≤ 50 Gew.-%, ≤ 45 Gew.-%, ≤ 40 Gew.-%, ≤ 35 Gew.-%, ≤ 30 Gew.-%, ≤ 25 Gew.-%, ≤ 20 Gew.-%, ≤ 15 Gew.-%, ≤ 10 Gew.-% sowie ≥ 2 Gew.-%, ≥ 3 Gew.-%, ≥ 4 Gew.-% oder ≥ 5 Gew.-% und alle Werte dazwischen, jeweils bezogen auf die wässrige Dispersion des feinteiligen anorganischen Feststoffes, eingesetzt werden. Bezogen auf 100 Gew.-Teile des Gemisches aus ethylenisch ungesättigten Monomeren werden erfindungsgemäß 1 bis 1000 Gew.-Teile, in der Regel 5 bis 300 Gew.-Teile und häufig 10 bis 200 Gew.-Teile des wenigstens einen feinteiligen anorganischen Feststoffes verwendet.

Vorteilhaft ist, dass die dispergierten Feststoffteilchen in einer wässrigen Standardkaliumchlorid-Lösung bei einem pH-Wert, der dem pH-Wert des wässrigen Reaktionsmediums vor Beginn der Zugabe der Dispergiermittel entspricht, eine von Null verschiedene elekrophoretische Mobilität zeigen. Die pH-Wertbestimmung erfolgt bei 20°C und 1 bar (absolut) mit handelsüblichen pH-Meßgeräten an einer wässrigen Dispersion, welche neben dem wenigstens einen feinteiligen anorganischen Feststoff gegebenenfalls noch Säuren oder Basen zur Einstellung des pH-Wertes enthält.

Die Methode zur Bestimmung der elektrophoretischen Mobilität ist dem Fachmann bekannt (vgl. z.B. R.J. Hunter, Introduction to modern Colloid Science, Kapitel 8.4, Seiten 241 bis 248, Oxford University Press, Oxford, 1993 sowie K. Oka und K. Furusawa, in Electrical Phenomena at Interfaces, Surfactant Science Series, Vol. 76, Kapitel 8, Seiten 151 bis 232, Marcel Dekker, New York, 1998). Die elektrophoretische Mobilität der im wässrigen Reaktionsmedium dispergierten Feststoffteilchen wird mittels eines handelsüblichen Elektrophoresegeräts, wie beispielsweise dem Zetasizer 3000 der Fa. Malvern Instruments Ltd., bei 20°C und 1 bar (absolut) bestimmt. Hierzu wird die wässrige Feststoffteilchendispersion mit einer pH-neutralen 10 millimolaren (mM) wässrigen Kaliumchlorid-Lösung (Standardkaliumchlorid-Lösung) soweit verdünnt, dass die Feststoffteilchen-Konzentration ca. 50 bis 100 mg/l beträgt. Die Einstellung der Meßprobe auf den pH-Wert, den das wässrige Reaktionsmedium vor Beginn der Zugabe der Dispergiermittel aufweist, erfolgt mittels der gängigen anorganischen Säuren, wie beispielsweise verdünnte Salzsäure oder Salpetersäure oder Basen, wie beispielsweise verdünnte Natronlauge oder Kalilauge. Die Wanderung der dispergierten Feststoffteilchen im elektrischen Feld wird mittels der sogenannten elektrophoretischen Lichtstreuung detektiert (vgl. z.B. B.R. Ware und W.H. Flygare, Chem. Phys. Lett. 1971, 12, Seiten 81 bis 85). Dabei wird das Vorzeichen der elektrophoretischen Mobilität durch die Wanderungsrichtung der dispergierten Feststoffteilchen definiert, d.h. wandern die dispergierten Feststoffteilchen zur Kathode, ist deren elektrophoretische Mobilität positiv, wandern sie dagegen zur Anode, ist sie negativ.

Ein geeigneter Parameter, um die elektrophoretische Mobilität von dispergierten Feststoffteilchen in einem gewissen Umfang zu beinflussen oder einzustellen, ist der pH-Wert des wässrigen Reaktionsmediums. Durch Protonierung bzw. Deprotonierung der dispergierten Feststoffteilchen wird die elektrophoretische Mobilität im sauren pH-Bereich (pH-Wert < 7) in positiver und im alkalischen Bereich (pH-Wert > 7) in negativer Richtung verändert. Ein für das erfindungsgemäße Verfahren geeigneter pH-Bereich ist der, innerhalb dessen sich eine radikalisch initiierte wässrige Emulsionspolymerisation durchführen läßt. Dieser pH-Bereich liegt in der Regel bei pH 1 bis 12, häufig bei pH 1,5 bis 11 und oft bei pH 2 bis 10.

Der pH-Wert des wässrigen Reaktionsmediums kann mittels handelsüblicher Säuren, wie beispielsweise verdünnte Salz-, Salpeter- oder Schwefelsäure oder Basen, wie beispielsweise verdünnte Natron- oder Kalilauge, eingestellt werden. Häufig ist es günstig, wenn eine Teil- oder die Gesamtmenge der zur pH-Einstellung verwendeten Säure- oder Basenmenge dem wässrigen Reaktionsmedium vor dem wenigstens einen feinteiligen anorganischen Feststoff zugesetzt wird.

Von Vorteil ist, dass dann, wenn die dispergierten Feststoffteilchen unter den vorgenannten pH-Bedingungen
- eine elektrophoretische Mobilität mit negativem Vorzeichen aufweisen, pro 100 Gew.-Teilen des wenigstens einen ethylenisch ungesättigten Monomeren, 0,01 bis 10 Gew.-Teile, bevorzugt 0,05 bis 5 Gew.-Teile und insbesondere bevorzugt 0,1 bis 3 Gew.-Teile wenigstens eines kationischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein anionisches Dispergiermittel eingesetzt werden, wobei dessen Menge so bemessen wird, dass das äquivalente Verhältnis von anionischem zu kationischem Dispergiermittel größer 1 ist, oder
- eine elektrophoretische Mobilität mit positivem Vorzeichen aufweisen, pro 100 Gew.-Teilen des wenigstens einen ethylenisch ungesättigten Monomeren, 0,01 bis 10 Gew.-Teile, bevorzugt 0,05 bis 5 Gew.-Teile und insbesondere bevorzugt 0,1 bis 3 Gew.-Teile wenigstens eines anionischen Dispergiermittels, 0,01 bis 100 Gew.-Teile, bevorzugt 0,05 bis 50 Gew.-Teile und insbesondere bevorzugt 0,1 bis 20 Gew.-Teile wenigstens eines nichtionischen Dispergiermittels und wenigstens ein kationisches Dispergiermittel eingesetzt werden, wobei dessen Menge so bemessen wird, dass das äquivalente Verhältnis von kationischem zu anionischem Dispergiermittel größer 1 ist.

Erfindungsgemäß werden Dispergiermittel mitverwendet, die sowohl die feinteiligen anorganischen Feststoffteilchen als auch die Monomerentröpfchen und die gebildeten Kompositpartikel in der wässrigen Phase dispers verteilt halten und so die Stabilität der erzeugten wässrigen Kompositpartikeldispersion gewährleisten. Als Dispergiermittel kommen sowohl die zur Durchführung von radikalischen wässrigen Emulsionspolymerisationen üblicherweise eingesetzten Schutzkolloide als auch Emulgatoren in Betracht.

Eine ausführliche Beschreibung geeigneter Schutzkolloide findet sich in Houben-Weyl Methoden der organischen Chemie, Band XIV/1, Makromolekulare Stoffe, Georg-Thieme-Verlag, Stuttgart, 1961, Seiten 411 bis 420.

Geeignete neutrale Schutzkolloide sind beispielsweise Polyvinylalkohole, Polyalkylenglykole, Cellulose-, Stärke- und Gelatinederivate.

Als anionische Schutzkolloide, d.h. Schutzkolloide, deren dispergierend wirkende Komponente wenigstens eine negative elektrische Ladung aufweist, kommen beispielsweise Polyacrylsäuren und Polymethacrylsäuren und deren Alkalimetallsalze, Acrylsäure, Methacrylsäure, 2-Acrylamido-2-methylpropansulfonsäure, 4-Styrolsulfonsäure und/oder Maleinsäureanhydrid enthaltende Copolymerisate und deren Alkalimetallsalze sowie Alkalimetallsalze von Sulfonsäuren hochmolekularer Verbindungen, wie beispielsweise Polystyrol, in Betracht.

Geeignete kationische Schutzkolloide, d.h. Schutzkolloide, deren dispergierend wirkende Komponente wenigstens eine positive elektrische Ladung aufweist, sind beispielsweise die am Stickstoff protonierten und/oder alkylierten Derivate von N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltenden Homo- und Copolymerisate. Selbstverständlich können auch Gemische aus Emulgatoren und/oder Schutzkolloiden eingesetzt werden. Häufig werden als Dispergiermittel ausschließlich Emulgatoren eingesetzt, deren relative Molekulargewichte im Unterschied zu den Schutzkolloiden üblicherweise unter 1000 liegen. Selbstverständlich müssen im Falle der Verwendung von Gemischen grenzflächenaktiver Substanzen die Einzelkomponenten miteinander verträglich sein, was im Zweifelsfgll an Hand weniger Vorversuche überprüft werden kann. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z.B. ethoxilierte Mono-, Di- und Tri-Alkylphenole (EO-Grad: 3 bis 50, Alkylrest: C₄ bis C₁₂) sowie ethoxilierte Fettalkohole (EO-Grad: 3 bis 80; Alkylrest: C₈ bis C₃₆). Beispiele hierfür sind die Lutensol^{®} A-Marken (C₁₂C₁₄-Fettalkoholethoxilate, EO-Grad: 3 bis 8), Lutensol^{®} AO-Marken (C₁₃C₁₅-Oxoalkoholethoxilate, EO-Grad: 3 bis 30), Lutensol^{®} AT-Marken (C₁₆C₁₈-Fettalkoholethoxilate, EO-Grad: 11 bis 80), Lutensol^{®} ON-Marken (C₁₀-Oxoalkoholethoxilate, EO-Grad: 3 bis 11) und die Lutensol^{®} TO-Marken (C₁₃-Oxoalkoholethoxilate, EO-Grad: 3 bis 20) der BASF AG.

Übliche anionische Emulgatoren sind z.B. Alkalimetall- und Ammoniumsalze von Alkylsulfaten (Alkylrest: C₈ bis C₁₂), von Schwefelsäurehalbestern ethoxylierter Alkanole (EO-Grad: 4 bis 30, Alkylrest: C₁₂ bis C₁₈) und ethoxilierter Alkylphenole (EO-Grad: 3 bis 50, Alkylrest: C₄ bis C₁₂), von Alkylsulfonsäuren (Alkylrest: C₁₂ bis C₁₈) und von Alkylarylsulfonsäuren (Alkylrest: C₉ bis C₁₈).

Als weitere anionische Emulgatoren haben sich ferner Verbindungen der allgemeinen Formel I 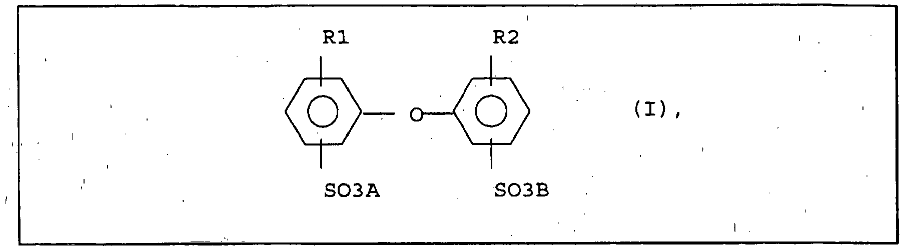 worin R¹ und R² H-Atome oder C₄- bis C₂₄-Alkyl bedeuten und nicht gleichzeitig H-Atome sind, und A und B Alkalimetallionen und/oder Ammoniumionen sein können, erwiesen. In der allgemeinen Formel I bedeuten R¹ und R² bevorzugt lineare oder verzweigte Alkylreste mit 6 bis 18 C-Atomen, insbesondere mit 6, 12 und 16 C-Atomen oder -H, wobei R¹ und R² nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, R¹ ein verzweigter Alkylrest mit 12 C-Atomen und R² ein H-Atom oder R¹ ist. Häufig werden technische Gemische verwendet, die einen Anteil von 50 bis 90 Gew.-% des monoalkylierten Produktes aufweisen, wie beispielsweise Dowfax^{®} 2A1 (Marke der Dow Chemical Company). Die Verbindungen I sind allgemein bekannt, z.B. aus US-A 4 269 749, und im Handel erhältlich.

Geeignete kationenaktive Emulgatoren sind in der Regel einen C₆- bis C₁₈-Alkyl-, - Aralkyl- oder heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid,N-Laurylpyridiniumsulfat sowie N-Cetyl-N,N,N-trimethylammoniumbromid, N-Dodecyl-N,N,N-trimethylammoniumbromid, N-Octyl-N,N,N- trimethlyammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in McCutcheon's, Emulsifiers & Detergents, MC Publishing Company, Glen Rock, 1989.

Unter äquivalentem Verhältnis von anionischem zu kationischem Dispergiermittel soll das Verhältnis der eingesetzten Molzahl des anionischen Dispergiermittels multipliziert mit der Anzahl der pro Mol des anionischen Dispergiermittels enthaltenen anionischen Gruppen dividiert durch die eingesetzte Molzahl des kationischen Dispergiermittels multipliziert mit der Anzahl der pro Mol des kationischen Dispergiermittels enthaltenen kationischen Gruppen verstanden werden. Entsprechendes gilt für das äquvalente Verhältnis von kationischem zu anionischem Dispergiermittel.

Die Gesamtmenge des im Verfahren verwendeten wenigstens einen anionischen, kationischen und nichtionischen Dispergiermittels kann in der wässrigen Feststoffdispersion vorgelegt werden. Es ist jedoch auch möglich, lediglich eine Teilmenge der genannten Dispergiermittel, in der wässrigen Feststoffdispersion vorzulegen und die verbliebenen Restmengen während der radikalischen Emulsionspolymerisation kontinuierlich oder diskontinuierlich zuzugeben. Vorteilhaft ist jedoch, dass vor und während der radikalisch initiierten Emulsionspolymerisation das vorgenannte äquivalente Verhältnis von anionischem und kationischem Dispergiermittel in Abhängigkeit vom elektrophoretischen Vorzeichen des feinteiligen Feststoffs aufrechterhalten wird. Werden daher anorganische Feststoffteilchen eingesetzt, welche unter den vorgenannten pH-Bedingungen eine elektrophoretische Mobilität mit negativem Vorzeichen aufweisen, so sollte das äquivalente Verhältnis von anionischem zu kationischem Dispergiermittel während der gesamten Emulsionspolymerisation größer 1 sein. In entsprechender Weise sollte bei anorganischen Feststoffteilchen mit einer elektrophoretischen Mobilität mit positivem Vorzeichen das äquivalente Verhältnis von kationischem zu anionischem Dispergiermittel während der gesamten Emulsionspolymerisation größer 1 sein. Günstig ist es, wenn das äquivalente Verhältnis ≥ 2, ≥ 3, ≥ 4, ≥ 5, ≥ 6, ≥ 7, oder ≥ 10 ist, wobei das äquivalente Verhältnis im Bereich zwischen 2 und 5 besonders günstig ist.

Von Vorteil ist es, wenn eine Teil- oder die Gesamtmenge des wenigstens einen nichtionischen Dispergiermittels vor dem wenigstens einen anionischen und kationischen Dispergiermittel zugegeben wird.

Die Durchführung einer radikalisch initiierten wässrigen Emulsionspolymerisation von ethylenisch ungesättigten Monomeren ist vielfach vorbeschrieben und dem Fachmann daher hinreichend bekannt [vgl. z.B. Encyclopedia of Polymer Science and Engineering, Vol. 8, Seiten 659 bis 677, John Wiley & Sons, Inc., 1987; D.C. Blackley, Emulsion Polymerisation, Seiten 155 bis 465, Applied Science Publishers, Ltd., Essex, 1975; D.C. Blackley, Polymer Latices, 2nd Edition, Vol. 1, Seiten 33 bis 415, Chapman & Hall, 1997; H. Warson, The Applications of Synthetic Resin Emulsions, Seiten 49 bis 244, Ernest Benn, Ltd., London, 1972; D. Diederich, Chemie in unserer Zeit 1990, 24, Seiten 135 bis 142, Verlag Chemie, Weinheim; J. Piirma, Emulsion Polymerisation, Seiten 1 bis 287, Academic Press, 1982; F. Hölscher, Dispersionen synthetischer Hochpolymerer, Seiten 1 bis 160, Springer-Verlag, Berlin, 1969 und die Patentschrift DE-A 40 03 422]. Sie erfolgt üblicherweise so, dass man die ethylenisch ungesättigten Monomeren unter Mitverwendung von Dispergiermitteln, in wässrigem Medium dispers verteilt und mittels wenigstens eines radikalischen Polymerisationsinitiators polymerisiert. Von dieser Verfahrensweise unterscheidet sich das erfindungsgemäße Verfahren lediglich durch ein zusätzliches Beisein von wenigstens einem feinteiligen anorganischen Feststoff, welcher eine von Null verschiedene elektrophoretische Mobilität aufweist sowie der Verwendung einer speziellen Dispergiermittelkombination.

Für das erfindungsgemäße Verfahren kommen neben den Alkoxysilanmonomeren als ethylenisch ungesättigte Monomere u.a. insbesondere in einfacher Weise radikalisch polymerisierbare Monomere in Betracht, wie beispielsweise Ethylen, vinylaromatische Monomere, wie Styrol, α-Methylstyrol, o-Chlorstyrol oder Vinyltoluole, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -iso-butyl und -2-ethylhexylester, Maleinsäuredimethylester oder Maleinsäure-di-n-butylester, Nitrile α,β-monoethylenisch ungesättigter Carbonsäuren, wie Acrylnitril sowie C₄₋₈-konjugierte Diene, wie 1,3-Butadien und Isopren. Die genannten Monomere bilden in der Regel die Hauptmonomeren, die, bezogen auf die Gesamtmenge der nach dem erfindungsgemäßen Verfahren zu polymerisierenden Monomeren normalerweise einen Anteil von ≥ 50 Gew.-%, ≥ 80 Gew.-% oder ≥ 90 Gew.-% auf sich vereinen. In aller Regel weisen diese Monomeren in Wasser bei Normalbedingungen [20 °C; 1 bar (absolut)] lediglich eine mäßige bis geringe Löslichkeit auf.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-C₁-C₈-Hydroxyalkylester wie n-Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Erfindungsgemäß werden die vorgenannten Monomeren, bezogen auf die Gesamtmenge der zu polymerisierenden Monomeren, in Mengen von bis zu 5 Gew.-% einpolymerisiert.

Daneben können als Monomere zusätzlich solche ethylenisch ungesättigten Monomere A, die entweder wenigstens eine Säuregruppe und/oder deren entsprechendes Anion oder solche ethylenisch ungesättigten Monomere B, die wenigstens eine Amino-, Amido-, Ureido- oder N-heterocyclische Gruppe und/oder deren am Stickstoff protonierten oder alkylierten Ammoniumderivate enthalten, eingesetzt werden. Bezogen auf die Gesamtmonomerenmenge, beträgt die Menge an Monomeren A bzw. Monomeren B bis zu 10 Gew.-%, oft 0,1 bis 7 Gew.-% und häufig 0,2 bis 5 Gew.-%.

Als Monomere A werden ethylenisch ungesättigte Monomere mit wenigstens einer Säuregruppe eingesetzt. Dabei kann die Säuregruppe beispielsweise eine Carbonsäure-, Sulfonsäure-, Schwefelsäure-, Phosphorsäure- und/oder Phosphonsäuregruppe sein. Beispiele für Monomere A sind Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie Phosphorsäuremonoester von n-Hydroxyalkylacrylaten und n-Hydroxyalkylmethacrylaten, wie beispielsweise Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat. Erfindungsgemäß lassen sich aber auch die Ammonium- und Alkalimetallsalze der vorgenannten wengistens eine Säuregruppe aufweisenden ethylenisch ungesättigten Monomeren einsetzen. Als Alkalimetall insbesondere bevorzugt ist Natrium und Kalium. Beispiele hierfür sind die Ammonium-, Natrium- und Kaliumsalze der Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure sowie die Mono- und Di-Ammonium-, -Natrium- und -Kaliumsalze der Phosphorsäuremonoester von Hydroxyethylacrylat, n-Hydroxypropylacrylat, n-Hydroxybutylacrylat und Hydroxyethylmethacrylat, n-Hydroxypropylmethacrylat oder n-Hydroxybutylmethacrylat.

Bevorzugt werden Acrylsäure, Methacrylsäure, Maleinsäure, Fumarsäure, Itaconsäure, Crotonsäure, 4-Styrolsulfonsäure, 2-Methacryloxyethylsulfonsäure, Vinylsulfonsäure und Vinylphosphonsäure eingesetzt.

Als Monomere B werden ethylenisch ungesättigte Monomere verwendet, die wenigstens eine Amino-, Amido-, Ureido- oder N-heterocyclische Gruppe und/oder deren am Stickstoff protonierten oder alkylierten Ammoniumderivate enthalten.

Beispiele für Monomere B, die wenigstens eine Aminogruppe enthalten sind 2-Aminoethylacrylat, 2-Aminoethylmethacrylat, 3-Aminopropylacrylat, 3-Aminopropylmethacrylat, 4-Amino-n-butylacrylat, 4-Amino-n-butylmethacrylat, 2-(N-Methylamino)ethylacrylat, 2-(N-Methylamino)ethylmethacrylat, 2-(N-Ethylamino)ethylacrylat, 2-(N-Ethylamino)ethylmethacrylat, 2-(N-n-Propylamino)ethylacrylat, 2-(N-n-Propylamino)ethylmethacrylat, 2-(N-iso-Propylamino)ethylacrylat, 2-(N-iso-Propylamino)ethylmethacrylat, 2-(N-tert.-Butylamino)ethylacrylat, 2-(N-tert.-Butylamino)ethylmethacrylat (beispielsweise kommerziell verfügbar als Norsocryl^{®} TBAEMA der Fa. Elf Atochem), 2-(N,N-Dimethylamino)ethylacrylat (beispielsweise kommerziell verfügbar als Norsocryl^{Ò} ADAME der Fa. Elf Atochem), 2-(N,N-Dimethylamino)ethylmethacrylat (beispielsweise kommerziell verfügbar als Norsocryl^{Ò} MADAME der Fa. Elf Atochem), 2-(N,N-Diethylamino)ethylacrylat, 2-(N,N-Diethylamino)ethylmethacrylat, 2-(N,N-Di-n-propylamino)ethylacrylat, 2-(N,N-Di-n-propylamino)ethylmethacrylat, 2-(N,N-Di-isopropylamino)ethylacrylat, 2-(N,N-Di-iso-propylamino)ethylmethacrylat, 3-(N-Methylamino)propylacrylat, 3-(N-Methylamino)propylmethacrylat, - 3-(N-Ethylamino)propylacrylat, 3-(N-Ethylamino)propylmethacrylat, 3-(N-n-Propylamino)propylacrylat, 3-(N-n-Propylamino)propylmethacrylat, 3-(N-iso-Propylamino)propylacrylat, 3-(N-iso-Propylamino)propylmethacrylat, 3-(N-tert.-Butylamino)propylacrylat, 3-(N-tert.-Butylamino)propylmethacrylat, 3-(N,N-Dimethylamino)propylacrylat, 3-(N,N-Dimethylamino)propylmethacrylat, 3-(N,N-Diethylamino)propylacrylat, 3-(N,N-Diethylamino)propylmethacrylat, 3-(N,N-Di-n-propylamino)propylacrylat, 3-(N,N-Di-n-propylamino)propylmethacrylat, 3-(N,N-Di-isopropylamino)propylacrylat und 3-(N,N-Di-iso-propylamino)propylmethacrylat.

Beispiele für Monomere B, die wenigstens eine Amidogruppe enthalten sind Acrylamid, Methacrylamid, N-Methylacrylamid, N-Methylmethacrylamid, N-Ethylacrylamid, N-Ethylmethacrylamid, N-n-Propylacrylamid, N-n-Propylmethacrylamid, N-iso-Propylacrylamid, N-iso-Propylmethacrylamid, N-tert.-Butylacrylamid, N-tert.-Butylmethacrylamid, N,N-Dimethylacrylamid, N,N-Dimethylmethacrylamid, N,N-Diethylacrylamid, N,N-Diethylmethacrylamid, N,N-Di-n-propylacrylamid, N,N-Di-n-propylmethacrylamid, N,N-Di-iso-propylacrylamid, N,N-Di-iso-propylmethacrylamid, N,N-Di-n-butylacrylamid, N,N-Di-n-butylmethacrylamid, N-(3-N',N'-Dimethylaminopropyl)methacrylamid, Diacetonacrylamid, N,N'-Methylenbisacrylamid N-(Diphenylmethyl)acrylamid, N-Cyclohexylacrylamid, aber auch N-Vinylpyrrolidon und N-Vinylcaprolactam.

Beispiele für Monomere B, die wenigstens eine Ureidogruppe enthalten sind N,N'-Divinylethylenharnstoff und 2-(1-Imidazolin-2-onyl)ethylmethacrylat (beispielsweise kommerziell verfügbar als Norsocryl^{®} 100 der Fa. Elf Atochem).

Beispiele für Monomere B, die wenigstens eine N-heterocyclische Gruppe enthalten sind 2-Vinylpyridin, 4-Vinylpyridin, 1-Vinylimidazol, 2-Vinylimidazol und N-Vinylcarbazol.

Bevorzugt werden folgende Verbindungen eingesetzt: 2-Vinylpyridin, 4-Vinylpyridin, 2-Vinylimidazol, 2-(N,N-Dimethylamino) ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino)ethylmethacrylat, N-(3-N',N'-Dimethylaminopropyl)methacrylamid und 2-(1 -Imidazolin-2-onyl)ethylmethacrylat.

Abhängig vom pH-Wert des wässrigen Reaktionsmediums kann eine Teil- oder die Gesamtmenge der vorgenannten stickstoffhaltigen Monomere B in der am Stickstoff protonierten quartären Ammoniumform vorliegen.

Als Monomere B, welche am Stickstoff eine quartäre Alkylammoniumstruktur aufweisen, seien beispielhaft genannt 2-(N,N,N-Trimethylammonium)ethylacrylatchlorid (beispielsweise kommerziell verfügbar als Norsocryl^{®} ADAMQUAT MC 80 der Fa. Elf Atochem), 2-(N,N,N-Trimethylammonium)ethylmethacrylatchlorid (beispielsweise kommerziell verfügbar als Norsocryl^{®} MADQUAT MC 75 der Fa. Elf Atochem), 2-(N-Methyl-N,N-diethylammonium)ethylacrylatchlorid, 2-(N-Methyl-N,N-diethylammonium)-ethylmethacrylatchlorid, 2-(N-Methyl-N,N-dipropylammonium)ethylacrylatchlorid, 2-(N-Methyl-N,N-dipropylammonium)ethylmethacrylat, 2-(N-Benzyl-N,N-dimethylammonium)ethylacrylatchlorid (beispielsweise kommerziell verfügbar als Norsocryl^{Ò} ADAMQUAT BZ 80 der Fa. Elf Atochem), 2-(N-Benzyl-N,N-dimethylammonium)ethylmethacrylatchlorid (beispielsweise kommerziell verfügbar als Norsocryl^{Ò} MADQUAT BZ 75 der Fa. E1f Atochem), 2-(N-Benzyl-N,N-diethylammonium)ethylacrylatchlorid, 2-(N-Benzyl-N,N-diethylammonium)ethylmethacrylatchlorid, 2-(N-Benzyl-N,N-dipropylammonium)ethylacrylatchlorid, 2-( N-Benzyl- N,N-dipropylammonium)ethylmethacrylatchlorid, 3-(N,N,N-Trimethylammonium)propylacrylatchlorid, 3-(N,N,N-Trimethylammonium)propyl-methacrylatchlorid, 3-(N-Methyl-N,N-diethylammonium)propylacrylatchlorid, 3-(N-Methyl-N,N-diethylammonium)propylmethacrylatchlorid, 3-(N-Methyl-N,N-dipropyl-ammonium)propylacrylatchlorid, 3-(N-Methyl-N,N-dipropylammonium)propyl-methacrylatchlorid, 3-(N-Benzyl-N,N-dimethylammonium)propylacrylatchlorid, 3-(N-Benzyl- N,N-dimethylammonium)propylmethacrylatchlorid, 3-(N-Benzyl- N,N-diethylammonium)propylacrylatchlorid, 3-(N-Benzyl-N,N-diethylammonium)propylmethacrylatchlorid, 3-(N-Benzyl-N,N-dipropylammonium)propylacrylatchlorid und 3-(N-Benzyl-N,N-dipropylammonium)propylmethacrylatchlorid. Selbstverständlich können an Stelle der genannten Chloride auch die entsprechenden Bromide und Sulfate eingesetzt werden.

Bevorzugt werden 2-(N,N,N-Trimethylammonium)ethylacrylatchlorid, 2-(N,N,N-Trimethylammonium)ethylmethacrylatchlorid, 2-(N-Benzyl-N,N-dimethylammonium)-ethylacrylatchlorid und 2-(N-Benzyl-N,N-dimethylammonium)ethylmethacrylatchlorid verwendet.

Es können auch beliebige geeignete Gemische der vorgenannten ethylenisch ungesättigten Monomere eingesetzt werden.

Von Bedeutung ist, dass im Falle des Vorliegens von dispergierten Feststoffteilchen mit einer elektrophoretischen Mobilität mit negativem Vorzeichen, eine Teil- oder die Gesamtmenge des wenigstens einen anionischen Dispergiermittels durch die äquvalente Menge wenigstens eines Monomeren A und im Falle des Vorliegens von dispergierten Feststoffteilchen mit einer elektrophoretischen Mobilität mit positivem Vorzeichen, eine Teil- oder die Gesamtmenge des wenigstens einen kationischen Dispergiermittels durch die äquivalente Menge wenigstens eines Monomeren B ersetzt werden kann.

Als wenigstens ein radikalischer Polymerisationsinitiator kommen für die erfindungsgemäße radikalische wässrige Emulsionpolymerisation alle diejenigen in Betracht, die in der Lage sind, eine radikalische wässrige Emulsionspolymerisation im Beisein des wenigstens eines feinteiligen anorganischen Feststoffes auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder DiCumylperoxid eingesetzt werden. Als Azoverbindung finden im wesentlichen 2,2'-Azobis(isobutyronitril), 2,2'-Azobis(2,4-dimethylvaleronitril) und 2,2'-Azobis(amidinopropyl)dihydrochlorid (AIBA, entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge des eingesetzten radikalischen Polymerisationsinitiators, bezogen auf die Gesamtmenge des Monomerengemisches, 0,1 bis 5 Gew.-%.

Erfindungsgemäß kann die Gesamtmenge des wenigstens einen radikalischen Polymerisationsinitiators gemeinsam mit dem wenigstens einen feinteiligen anorganischen Feststoff im Reaktionsmedium vorgelegt werden. Es ist aber auch möglich, gegebenenfalls lediglich eine Teilmenge des wenigstens einen radikalischen Polymerisationsinitiators in der wässrigen Feststoffdispersion vorzulegen und dann während der erfindungsgemäßen radikalischen Emulsionspolymerisation die Gesamtmenge bzw. die gegebenenfalls verbliebene Restmenge nach Maßgabe des Verbrauchs kontinuierlich oder diskontinuierlich zuzugeben.

Bevorzugt für das Verfahren ist, dass der wässrigen Feststoffteilchendispersion zuerst die vorgenannten Dispergiermittel zugesetzt, daran anschließend 0,01 bis 30 Gew.-%, oft 0,5 bis 20 Gew.-% und häufig 1 bis 10 Gew.-% der Gesamtmenge des wenigstens einen Monomeren diskontinuierlich in einer Portion zugegeben und diese bis zu einem Umsatz von wenigstens 90 %, bevorzugt ≥ 95 % polymerisiert werden. Daran anschließend wird die Restmenge des wenigstens einen ethylenisch ungesättigten Monomeren unter Polymerisationsbedingungen nach Maßgabe des Verbrauchs kontinuierlich oder diskontinuierlich zugegeben. Dabei kann die Zugabe der Monomeren in Substanz oder aber auch in Form einer wässrigen Monomerenemulsion erfolgen.

Als Reaktionstemperatur für die radikalische wässrige Emulsionspolymerisation im Beisein des wenigstens einen feinteiligen anorganischen Feststoffes kommt der gesamte Bereich von 0 bis 170 °C in Betracht. Dabei werden in der Regel Temperaturen von 50 bis 120 °C, häufig 60 bis 110 °C und oft ≥ 70 bis 100°C angewendet. Die radikalische wässrige Emulsionspolymerisation kann bei einem Druck kleiner, gleich oder größer 1 bar

(absolut) durchgeführt werden, so dass die Polymerisationstemperatur 100 °C übersteigen und bis zu 170 °C betragen kann. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von 950 mbar, häufig von 900 mbar und oft 850 mbar (absolut) eingestellt. Vorteilhaft wird die erfindungsgemäße radikalische wässrige Emulsionspolymerisation bei 1 bar (absolut) unter Inertgasatmosphäre, wie beispielsweise unter Stickstoff oder Argon durchgeführt.

Das wässrige Reaktionsmedium kann prinzipiell auch wasserlösliche, organische Lösungsmittel, wie beispielsweise Methanol, Ethanol, Isopropanol, Butanole, Pentanole, aber auch Aceton etc. umfassen. Bevorzugt wird das erfindungsgemäße Verfahren jedoch in Abwesenheit solcher Lösungsmittel durchgeführt.

Neben den vorgenannten Komponenten können im Verfahren optional auch radikalkettenübertragende Verbindungen eingesetzt werden, um das Molekulargewicht der durch die Polymerisation zugänglichen Polymerisate zu reduzieren bzw. zu kontrollieren. Dabei kommen im wesentlichen aliphatische und/oder araliphatische Halogenverbindungen, wie beispielsweise n-Butylchlorid, n-Butylbromid, n-Butyljodid, Methylenchlorid, Ethylendichlorid, Chloroform, Bromoform, Bromtrichlormethan, Dibromdichlormethan, Tetrachlorkohlenstoff, Tetrabromkohlenstoff, Benzylchlorid, Benzylbromid, organische Thioverbindungen, wie primäre, sekundäre oder tertiäre aliphatische Thiole, wie beispielsweise Ethanthiol, n-Propanthiol, 2-Propanthiol, n-Butanthiol, 2-Butanthiol, 2-Methyl-2-propanthiol, n-Pentanthiol, 2-Pentanthiol, 3-Pentanthiol, 2-Methyl-2-butanthiol, 3-Methyl-2-butanthiol, n-Hexanthiol, 2-Hexanthiol, 3-Hexanthiol, 2-Methyl-2-pentanthiol, 3-Methyl-2-pentanthiol, 4-Methyl-2-pentanthiol, 2-Methyl-3-pentanthiol, 3-Methyl-3-pentanthiol, 2-Ethylbutanthiol, 2-Ethyl-2-butanthiol, n-Heptanthiol und seine isomeren Verbindungen, n-Octanthiol und seine isomeren Verbindungen, n-Nonanthiol und seine isomeren Verbindungen, n-Decanthiol und seine isomeren Verbindungen, n-Undecanthiol und seine isomeren Verbindungen, n-Dodecanthiol und seine isomeren Verbindungen, n-Tridecanthiol und seine isomeren Verbindungen, substituierte Thiole, wie beispielsweise 2-Hydroxyethanthiol, aromatische Thiole, wie Benzolthiol, ortho-, meta-, oder para-Methylbenzolthiol, sowie alle weiteren im Polymerhandbook 3rg edtition, 1989, J. Brandrup und E.H. Immergut, John Weley & Sons, Abschnitt II, Seiten 133 bis 141, beschriebenen Schwefelverbindungen, aber auch aliphatische und/oder aromatische Aldehyde, wie Acetaldeyhd, Propionaldehyd und/oder Benzaldehyd, ungesättigte Fettsäuren, wie Ölsäure, Diene mit nicht konjugierten Doppelbindungen, wie Divinylmethan oder Vinylcyclohexan oder Kohlenwasserstoffe mit leicht abstrahierbaren Wasserstoffatomen, wie beispielsweise Toluol, zum Einsatz. Es ist aber auch möglich, Gemische sich nicht störender vorgenannter radikalkettenübertragender Verbindungen einzusetzen.

Die im erfindungsgemäßen Verfahren optional eingesetzte Gesamtmenge der radikalkettenübertragenden Verbindungen, bezogen auf die Gesamtmenge der zu polymerisierenden Monomeren, ist in der Regel ≤ 5 Gew.-%, oft ≤ 3 Gew.-% und häufig ≤ 1 Gew.-%.

Günstig ist es, wenn eine Teil- oder die Gesamtmenge der optional eingesetzten radikalkettenübertragenden Verbindung dem Reaktionsmedium vor der Initiierung der radikalischen Polymerisation zugeführt wird. Darüber hinaus kann eine Teil- oder die Gesamtmenge die radikalkettenübertragende Verbindung dem Reaktionsmedium vorteilhaft auch gemeinsam mit dem wenigstens einen ethylenisch ungesättigten Monomeren während der Polymerisation zugeführt werden.

Das Verfahren kann beispielsweise so ausgeübt werden, dass man eine stabile wässrige Dispersion des wenigstens einen feinteiligen anorganischen Feststoffs, enthaltend entweder eine Teil- oder die Gesamtmenge des benötigten Wassers, des wenigstens einen anionischen, kationischen und nichtionischen Dispergiermittels, des wenigstens einen Polymerisationsinitiators und 0,01 bis 30 Gew.-% der Gesamtmenge des Gemisches der ethylenisch ungesättigten Monomeren sowie der gegebenenfalls weiteren üblichen Hilfs- und Zusatzstoffe in einem Reaktionsbehälter vorlegt und den Inhalt des Reaktionsbehälters auf Reaktionstemperatur aufheizt. Nachdem das Gemisch der ethylenisch ungesättigten Monomere bis zu einem Umsatz von wenigstens 90 % polymerisiert ist, werden bei dieser Temperatur die gegebenenfalls verbliebenen Restmengen des Wassers, des wenigstens einen anionischen, kationischen und nichtionischen Dispergiermittels, des wenigstens einen ethylenisch ungesättigten Monomeren sowie der gegebenenfalls weiteren üblichen Hilfs- und Zusatzstoffe kontinuierlich oder diskontinuierlich zugesetzt und anschließend gegebenenfalls noch weiter auf Reaktionstemperatur gehalten.

Die so zugänglichen wässrigen Dispersionen von Kompositpartikeln weisen üblicherweise einen Feststoffgehalt von 1 bis 70 Gew.-%, häufig von 5 bis 65 Gew.-% und oft von 10 bis 60 Gew.-% auf.

Die Kompositpartikel besitzen in der Regel Teilchendurchmesser von ≤ 1000 nm, häufig ≤ 500 nm und oft ≤ 250 nm. Auch die Bestimmung dieser Teilchendurchmesser erfolgt durch die Methode der Analytischen Ultrazentrifuge. Die angegebenen Werte entsprechen den sogenannten d₅₀-Werten.

Die nach dem beschriebenen Verfahren erhältlichen Kompositpartikel können unterschiedliche Strukturen aufweisen. Die Kompositpartikel können ein oder mehrere der feinteiligen Feststoffteilchen enthalten. Die feinteiligen en Feststoffteilchen können vollständig von der Polymermatrix umhüllt sein. Es ist aber auch möglich, dass ein Teil der feinteiligen Feststoffteilchen von der Polymermatrix umhüllt ist, während ein anderer Teil auf der Oberfläche der Polymermatrix angeordnet ist. Selbstverständlich ist es auch möglich, dass ein Großteil der feinteiligen Feststoffpartikel auf der Oberfläche der Polymermatrix gebunden ist. Zu beachten ist, dass es in Einzelfällen, abhängig von der Feststoffkonzentration der dispergierten Kompositpartikel, auch zu einer geringen Teilagglomeration der Kompositpartikel kommen kann.

Selbstverständlich können die nach Abschluß der Hauptpolymerisationsreaktion in der wässrigen Dispersion der Kompositpartikel verbliebenen Monomerenrestmengen durch Dampf- und/oder Inertgasstrippung und/oder durch chemische Desodorierung, wie sie beispielsweise in den Schriften DE-A 4 419 518, EP-A 767 180 oder DE-A 3 834 734 beschrieben sind, entfernt werden, ohne dass sich die Eigenschaften der wässrigen Kompositpartikeldispersion nachteilig verändern.

Aus den über das beschriebene Verfahren zugänglichen wässrigen Kompositpartikeldispersionen lassen sich in einfacher Weise anorganische Feststoffteilchen enthaltende Polymerisatfilme herstellen. Diese Polymerisatfilme weisen gegenüber den keine anorganischen Feststoffteilchen enthaltenden Polymerisatfilmen in der Regel eine erhöhte mechanische Festigkeit, ein geringeres Weißanlaufen, eine bessere Haftung an mineralischen Oberflächen, eine verbesserte Resistenz gegenüber organischen Lösemitteln sowie eine erhöhte Kratzfestigkeit, Blockfestigkeit und Wärmestandfestigkeit auf. Eine insbesondere geringere Empfindlichkeit der Polymerisatfilme sowie gute flammhemmende Eigenschaften gegenüber organischen Lösemitteln und Wasser weisen die Filme der wässrigen Kompositpartikeldispersionen auf, da in die Polymerisate Siloxangruppen enthaltende Monomere einpolymerisiert wurden.

Die genannten Eigenschaften machen die erfindungsgemäß eingesetzten wässrigen Dispersionen besonders vorteilhaft in der Grundierung glasartiger Untergründe.

Gemäß der zweiten Ausführungsform der Erfindung ist es möglich, zunächst eine Polymerdispersion ohne Mitverwendung der anorganischen Feststoffe herzustellen und die anorganischen Feststoffe sodann in dispers verteilter, feinteiliger Form in Gegenwart mindestens eines Dispergiermittels mit der wässrigen Polymerdispersion abzumischen. Dabei gelten die vorstehenden Ausführungen für die Herstellung der wässrigen Polymerdispersionen und für die Auswahl der anorganischen Feststoffe in analoger Weise. Es wurde erfindungsgemäß gefunden, dass zur Grundierung glasartiger Untergründe auch Abmischungen der Polymerisate in bereits polymerisierter Form mit dem feinteiligen anorganischen Feststoff vorteilhaft eingesetzt werden können. Dies ist insbesondere bei glasartigen silikatischen Flächen/Untergründen der Fall. Beispiele geeigneter Untergründe sind glasierte Fliesen oder Glasscheiben bzw. Glasplatten.

Die Erfindung wird durch die nachstehenden Beispiele näher erläutert.

### Beispiele

Für die folgenden Beispiele wurde als feinteiliger anorganischer Feststoff Siliziumdioxid, verwendet. Exemplarisch wurde das kommerziell verfügbare Siliziumdioxidsol Nyacol^{®} 2040 (20 nm) der Firma Akzo-Nobel eingesetzt. Der Siliziumdioxid-Gehalt der wässrigen Feststoffteilchendispersion betrug 40 Gew.-% und der pH-Wert betrug 10. Der in runden Klammern angegebene Wert entspricht dem Durchmesser der anorganischen Feststoffteilchen nach Herstellerangaben.

Die in den Beispielen verwendete Feststoffdispersion erfüllte alle an sie gestellte Forderungen, nämlich, dass sie bei einer Anfangsfeststoffkonzentration von ≥ 1 Gew.-%, bezogen auf die wässrige Dispersion des Feststoffes, noch eine Stunde nach ihrer Herstellung ohne Rühren oder Schütteln mehr als 90 Gew.-% des ursprünglich dispergierten Feststoffes in dispergierter Form enthielt, die dispergierten Feststoffteilchen einen Durchmesser ≤ 100 nm aufwiesen und darüber hinaus die dispergierten anorganischen Feststoffteilchen in einer wässrigen Standardkaliumchlorid-Lösung bei einem pH-Wert, der dem pH-Wert des wässrigen Dispergiermediums vor Beginn der Zugabe der Dispergiermittel entsprach, eine von Null verschiedene elektrophoretische Mobilität zeigten.

### 1. Beispiel

In einem 2 1-Vierhalskolben, ausgerüstet mit einem Rückflußkühler, einem Thermometer, einem mechanischem Rührer sowie einer Dosiervorrichtung, wurden bei 20 bis 25°C (Raumtemperatur) und 1 bar (absolut) unter Stickstoffatmosphäre und Rühren (200 Umdrehungen pro Minute) 416,6 g Nyacol^{®} 2040 und daran anschließend ein Gemisch aus 2,5 g Methacrylsäure und 12 g einer 10 gew.-%igen wässrigen Lösung von Natriumhydroxid innerhalb von 5 Minuten zugegeben. Danach fügte man der gerührten Reaktionsmischung während 15 Minuten 10,4 g einer 20 gew.-%igen wässrigen Lösung des nichtionischen Tensids Lutensol^{®} AT18 (Marke der BASF AG, C₁₆C₁₈-Fettalkoholethoxilat mit 18 Ethylenoxid-Einheiten) zu. Daran anschließend wurde dem Reaktionsgemisch während 60 Minuten 0,83 g N-Cetyl-N,N,N-trimethylammoniumbromid (CTAB), gelöst in 200 g entionisiertem Wasser, zudosiert. Danach heizte man das Reaktionsgemisch auf eine Reaktionstemperatur von 76° C auf.

Parallel stellte man als Zulauf 1 eine Monomerenmishung, bestehend aus 123,5 g Methylmethacrylat (MMA), 126 g n-Butylacrylat (n-BA) und 0,5 g Methacryloxypropyltrimethoxysilan (MEMO) sowie als Zulauf 2 eine Initiatorlösung, bestehend aus 3,8 g Natriumperoxodisulfat, 11,5 g einer 10 gew.-%igen Lösung von Natriumhydroxid und 100 g entionisiertem Wasser, her.

Anschließend wurden der bei Reaktionstemperatur gerührten Reaktionsmischung während 5 Minuten über zwei separate Zulaufleitungen 21,1 g von Zulauf 1 und 57,1 g von Zulauf 2 zugegeben. Danach rührte man die Reaktionsmischung eine Stunde bei Reaktionstemperatur. Anschließend fügte man dem Reaktionsgemisch 0,92 g einer 45 gew.-%igen wässrigen Lösung von Dowfax^{®} 2A1 zu und erhöhte die Reaktionstemperatur auf 80 °C. Innerhalb von 2 Stunden wurden nun zeitgleich beginnend die Reste von Zulauf 1 und Zulauf 2 dem Reaktionsgemisch kontinuierlich zudosiert. Danach rührte man die Reaktionsmischung eine weitere Stunde bei Reaktionstemperatur und und kühlte sie anschließend auf Raumtemperatur ab.

Die so erhaltene durchscheinende wässrige Kompositpartikeldispersion wies einen Feststoffgehalt von 40,1 Gew.-%, bezogen auf das Gesamtgewicht der wässrigen Kompositpartikeldispersion, auf.

Der Feststoffgehalt wurde generell bestimmt, indem ca. 1 g der Kompositpartikeldispersion in einem offenen Aluminiumtiegel mit einem Innendurchmesser von ca. 3 cm in einem Trockenschrank bei 150° C bis zur Gewichtskonstanz getrocknet wurde. Zur Bestimmung des Feststoffgehalts wurden jeweils zwei separate Messungen durchgeführt und der entsprechende Mittelwert gebildet.

Der d₅₀-Teilchendurchmesser wurden mit einer Analytischen Ultrazentrifuge zu 65 nm bestimmt (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175). Mittels der Analytischen Zentrifuge konnte auch nachgewiesen werden, dass die erhaltenen Kompositpartikel eine homogene Dichte von 1,33 g/cm³ aufwiesen. Freie Siliziumdioxidteilchen ließen sich nicht nachweisen.

Die Vorzeichenbestimmung der elektrophoretischen Mobilität erfolgte beim verwendeten feinteiligen anorganischen Feststoff mittels des Zetasizer 3000 der Fa. Malvem Instruments Ltd., Großbritannien. Hierzu verdünnte man die feinteilige anorganische Feststoffdispersion mit pH-neutraler 10 mM Kaliumchlorid-Lösung (Standardkaliumchlorid-Lösung) soweit, dass deren Feststoffteilchenkonzentration 60 mg pro Liter lag. Mittels verdünnter Natronlauge stellte man den pH-Wert von 10 ein. Die elektrophoretische Mobilität der Siliziumdioxidteilchen in Nyacol^{®} 2040 wies dabei ein negatives Vorzeichen auf.

### Vergleichsbeispiel 1

Anstelle der wässrigen Dispersionen gemäß Beispiel 1 wurde die handelsübliche Acrylatdispersion Acronal^{®} S 559 eingesetzt.

### Vergleichsbeispiel 2

Anstelle der wässrigen Dispersion gemäß Beispiel 1 wurde eine handelsübliche Acrylatdispersion Acronal^{®} S 533 eingesetzt.

Die wässrigen Dispersionen gemäß Beispiel 1, Vergleichsbeispiel 1 und Vergleichsbeispiel 2 wurden auf Glasplatten aufgebracht und einem Gitterschnitttest und einem Test des Weißanlaufens unterzogen. Die Durchführung der Tests und die erhaltenen Ergebnisse sind nachstehend aufgeführt.

### Gitterschnitttest

Geräte: Erichsen-Filmziehrahmen, Gitterschnitt-Prüfer
Substrat: Glasplatte 480 x 70 mm
Auftrag: 100 µm nass
Trocknung: 24 Std. bei NK (Normklima, 23°C bei 50 % relativer Feuchte.
Verfahrensweise: Die zu prüfende Dispersion wird mittels eines Rakels auf eine zuvor gereinigte/fettfreie Glasplatte aufgetragen. Die Trockenschichtdicke soll 50 µm betragen. Der Film wird 24 Std. bei Normklima getrocknet und anschließend ein Gitterschnitt aufgebracht. Die Probe wird dann für 5/10 Minuten senkrecht in ein Wasserbad getaucht, dann die anhaftende Feuchtigkeit vorsichtig vom Film abgetupft. Auf das Schnittgitter wird ein Klebestreifen aufgeklebt und glatt gestrichen, anschließend wird der Klebestreifen mit gleichmäßiger Geschwindigkeit vom Probekörper abgezogen und das Schadensbild beurteilt.

| | | |
|---|---|---|
| Beurteilung: | 0 = | Keine Abplatzungen (Die Schnittränder sind vollkommen glatt) |
| | 1 = | Die abgeplatzte Fläche beträgt ca. 5 % der Teilstücke. |
| | 2 = | Die abgeplatzte Fläche bewegt sich zwischen 5 % und 15 % der Teilstücke. |
| | 3 = | Die abgeplatzte Fläche bewegt sich zwischen 15 und 35 % der Teilstücke. |
| | 4 = | Die abgeplatzte Fläche bewegt sich zwischen 35 und 65 % der Teilstücke. |
| | 5 = | Die abgeplatzte Fläche beträgt mehr als 65 % der Teilstücke. |

### Weißanlaufen

Geräte: Erichsen-Filmziehrahmen
Substrat: Glasplatte 480 x 70 mm
Auftrag: 100 µm nass
Trocknung: 24 Std. bei NK

Verfahrensweise: Die zu prüfende Dispersion wird mittels eines Rakels auf eine zuvor gereinigte/fettfreie Glasplatte aufgetragen. Die Trockenschichtdicke soll 50 µm betragen. Der Film wird 24 Std. bei Normklima getrocknet, anschließend wird die Probe zur Hälfte senkrecht in ein Wasserbad getaucht und nach 120 Minuten das Weißanlaufen beurteilt.

| | |
|---|---|
| Beurteilung: | 0 = Keine Trübung |
| | 1 = Sehr schwache Trübung |
| | 2 = Stärkere Trübung |
| | 3 = Starke Trübung |
| | 4 = Sehr starke Trübung. |

### Ergebnisse der Grundierungsprüfung

**Tabelle 1**

| **Prüfmethode** | **Einheit** | | | |
|---|---|---|---|---|
| | | V2 | V1 | **Beispiel 1** |
| pH-Wert | - | 7-8 | 6-7,5 | 9,3 |
| FG | % | 52 | 50 | 40,1 |
| Gitterschnitt | 0-5 | zu weich | 5 | 0 |
| Weißanlaufen (120 Min.) | 0-4 | 4 | 4 | 0 |

Wie aus den Ergebnissen der Tabelle 1 hervorgeht, zeigt die wässrige Dispersion gemäß Beispiel 1 ein sehr vorteilhaftes Verhalten im Gitterschnitttest und bezüglich des Weißanlaufens.

### Beispiel 2

Es wurden zunächst wässrige Polymerdispersionen hergestellt, die sodann mit 30 % Silika-Sol abgemischt wurden. Zum Vergleich wurden die reinen Polymerdispersionen einer Gitterschnittprüfung unterzogen.

Die Herstellung erfolgte mit den nachstehend aufgeführten Monomeren (Angabe in Gewichtsteilen). Es sind ferner der Feststoffgehalt und der pH-Wert angegeben.

### Primerdispersionen

| **Probe:** | **Monomere:** | **FG:** | **pH:** |
|---|---|---|---|
| V2A | 57,0 n-BA | 52 | 8,2 |
| | 42,0 S | | |
| | 1,00 AS | | |
| | | | |

| **Probe:** | **Monomere:** | **FG:** | **pH:** |
|---|---|---|---|
| 2A | 57,0 n-BA | 51,4 | 7,8 |
| | 41,5 S | | |
| | 0,5 MEMO | | |
| | 1,0 AS | | |
| | | | |

| **Probe:** | **Monomere:** | **FG:** | **pH:** |
|---|---|---|---|
| V2B | 55,0 EHA | 51,9 | 7,4 |
| | 44,0 S | | |
| | 1,00 AS | | |
| | | | |

| **Probe:** | **Monomere:** | **FG:** | **pH:** |
|---|---|---|---|
| 2B | 55,0 EHA | 51,5 | 7,5 |
| | 43,0 S | | |
| | 1,00 AS | | |
| | 1,0 MEMO. | | |

- MEMO:': Methacryloxypropyltrimethoxysilan
- FG:: Feststoffgehalt
- NaPS:: Natriumperoxodisulfat
- EHA:: Ethylhexylacrylat
- n-BA:: n-Butylacrylat
- AS:: Acrylsäure
- S:: Styrol.

In einem Polymerisationsreaktor werden 270 g Wasser und 10,6 g eines 33 gew.-%igen wässrigen Saatlatex (Polystyrol) unter Stickstoffatmosphäre vorgelegt. Man erwärmt die Vorlage auf 85°C und gibt unter Beibehaltung der Temperatur 10% des Zulaufs 2 in die Vorlage.

Nach 5 Minuten gibt man zeitgleich beginnend und mit konstanter Zulaufgeschwindigkeit Zulauf 1 in 180 Minuten und den Rest von Zulauf 2 in 210 Minuten zu. Nach dem Ende der Zuläufe 1 und 2 wird auf 65°C abgekühlt und zur Verringerung des Restmonomerengehalts werden die Zuläufe 3 und 4 zeitgleich beginnend in 90 Minuten zudosiert. Die Dispersion wird auf Raumtemperatur abgekühlt und 26,6 g einer 10 gew.-%igen Natriumhydroxidlösung zugegeben.
Zulauf 1 (Emulsionszulauf):
Gesamtmenge an Monomeren: 700g
Art der Monomere siehe Tabelle (S.34, Zeile 10 ff)
273,7 g Wasser
38,9 g Emulgator Dowfax 2A1 (45 gew.-%ige wässrige Lösung des Natriumsalzes eines mit einem C12-C14-Alkylrest und mit zwei SO₃K-Resten derivatisierten Diphenylethers)
5.8 g Emulgator Disponil FES 77 (33 gew.-%ige wässrige Lösung des Natriumsalzes des Schwefelsäurehalbesters eines ethoxylierten C12-Alkanols (Ethoxylierungsgrad von etwa 30)
Zulauf 2 (Initiatorzulauf):
30 g Wasser
1,4 g Natriumperoxodisulfat
Zulauf 3:
21 g tert.-Butylhydroperoxid (10 gew.-%ig in Wasser)
Zulauf 4:
28 g einer 13 gew.-%igen wässrigen Lösung von Aceton-Bisulfit-Addukt

Die unterschiedlichen Versuchsdispersionen wurden sodann jeweils mit 30 % Silika-Sol abgemischt. Die Ergebnisse für Gitterschnitt und Weißanlaufen sind in der nachfolgenden Tabelle zusammengefasst.

### Prüfergebnisse der Versuchsdispersionen

abgemischt mit jeweils 30 % Silika-Sol Nyacol® 2040 (fest auf fest) von Akzo Nobel Chemicals GmbH, Düren (Teilchendurchmesser ∼ 15 nm)

**Tabelle 2**

| **Prüfmethode** | V2A 30 % Nyacol 2040 | 2A 30 % Nyacol 2040 | V2B 30 % Nyacol 2040 | 2B 30 % Nyacol 2040 |
|---|---|---|---|---|
| **Gitterschnitt** | **5** | **3** | **5** | **1** |
| **Weißanlaufen** | **2** | **1** | **2** | **1** |

Die reinen Dispersionen V2A, 2A, V2B und 2B erzielen in der Gitterschnittprüfung die Note 5.

Wie aus der Tabelle hervorgeht, zeigen die erfindungsgemäß eingesetzten Abmischungen vorteilhafte Werte bei Weißanlaufen und insbesondere beim Gitterschnitt. Sie sind den Vergleichssystemen, die ohne Einsatz der Alkoxysiloxan-Monomere hergestellt wurden, deutlich überlegen.

## Patentansprüche

1. Verwendung von wässrigen Dispersionen von aus Polymerisat und feinteiligem anorganischem Feststoff aufgebauten Kompositpartikeln, die durch radikalische Emulsionspolymerisation eines Gemisches ethylenisch ungesättigter Monomeren, das mindestens ein ethylenisch ungesättigtes Alkoxysilanmonomer enthält, in einem wässrigen Medium im Beisein eines dispers verteilten, feinteiligen anorganischen Feststoffs und mindestens eines Dispergiermittels erhältlich sind, zur Grundierung glasartiger Untergründe, wobei der feinteilige anorganische Feststoff so beschaffen ist, dass die im wässrigen Reaktionsmedium dispergierten Feststoffteilchen einen Teilchendurchmesser von ≤ 100 nm aufweisen und die Ermittlung der Teilchendurchmesser über die Methode der Analytischen Ultrazentrifuge erfolgt (vgl. hierzu S. E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

2. Verwendung von wässrigen Dispersionen, erhältlich durch Abmischen eines Polymerisats, das durch radikalische Emulsionspolymerisation eines Gemisches ethylenisch ungesättigter Monomeren, das mindestens ein ethylenisch ungesättigtes Alkoxysilanmonomer enthält, in einem wässrigen Medium erhältlich ist, mit einem dispers verteilten, feinteiligen anorganischen Feststoff in Gegenwart mindestens eines Dispergiermittels, zur Grundierung glasartiger Untergründe, wobei der feinteilige anorganische Feststoff so beschaffen ist, dass die im wässrigen Reaktionsmedium dispergierten Feststoffteilchen einen Teilchendurchmesser von ≤ 100 nm aufweisen und die Ermittlung der Teilchendurchmesser über die Methode der Analytischen Ultrazentrifuge erfolgt (vgl. hierzu S. E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

3. Verwendung nach Anspruch 1 oder 2, **dadurch gekennzeichnet, dass** die ethylenisch ungesättigten Alkoxysilanmonomere ausgewählt sind aus Trialkoxysilanen mit Vinyl-, Acryloxy- oder Methacryloxy-Gruppen als ethylenisch ungesättigten Gruppen.

4. Verwendung nach Anspruch 1, **dadurch gekennzeichnet, dass** zur Herstellung der wässrigen Dispersion in Gegenwart mindestens eines anionischen, kationischen und nichtionischen Dispergiermittels nach der Methode der radikalisch wässrigen Emulsionspolymerisation polymerisiert wird, wobei
a) eine stabile wässrige Dispersion des wenigstens einen anorganischen Feststoffs eingesetzt wird, welche dadurch charakterisiert ist, dass sie bei einer Anfangsfeststoffkonzentration von ≥ 1 Gew.-%, bezogen auf die wässrige Dispersion des wenigstens einen anorganischen Feststoffs, noch eine Stunde nach ihrer Herstellung mehr als 90 Gew.-% des ursprünglich dispergierten Feststoffes in dispergierter Form enthält und deren dispergierte Feststoffteilchen einen Durchmesser ≤ 100 nm aufweisen,
b) die dispergierten Feststoffteilchen des wenigstens einen anorganischen Feststoffs in einer wässrigen Standardkaliumchlorid-Lösung bei einem pH-Wert, der dem pH-Wert des wässrigen Reaktionsmediums vor Beginn der Zugabe der Dispergiermittel entspricht, eine von Null verschiedene elektrophoretische Mobilität zeigen,
c) die wässrige Feststoffteilchendispersion vor Beginn der Zugabe des Gemisches der ethylenisch ungesättigten Monomeren mit wenigstens einem anionischen, kationischen und nichtionischen Dispergiermittel versetzt wird,
d) danach 0,01 bis 30 Gew.-% der Gesamtmenge des Gemisches der Monomeren der wässrigen Feststoffteilchendispersion zugesetzt und bis zu einem Umsatz von wenigstens 90 % polymerisiert wird,
und
e) daran anschließend die Restmenge des Gemisches der Monomeren unter Polymerisationsbedingungen nach Maßgabe des Verbrauchs zugegeben wird.

5. Verwendung nach Anspruch 4, **dadurch gekennzeichnet, dass** zur Herstellung der wässrigen Dispersion, bezogen auf 100 Gew.-Teile des Gemisches der ethylenisch ungesättigten Monomeren, 1 bis 1000 Gew.-Teile des wenigstens einen feinteiligen anorganischen Feststoffs eingesetzt werden und, dass dann, wenn die dispergierten Feststoffteilchen
a) eine elektrophoretische Mobilität mit negativem Vorzeichen aufweisen, 0,01 bis 10 Gew.-Teile wenigstens eines kationischen Dispergiermittels, 0,01 bis 100 Gew.-Teile wenigstens eines nichtionischen Dispergiermittels und wenigstens ein anionisches Dispergiermittel eingesetzt werden, wobei dessen Menge so bemessen wird, dass das äquivalente Verhältnis von anionischem zu kationischem Dispergiermittel größer 1 ist, oder
b) eine elektrophoretische Mobilität mit positivem Vorzeichen aufweisen, 0,01 bis 10 Gew.-Teile wenigstens eines anionischen Dispergiermittels, 0,01 bis 100 Gew.-Teile wenigstens eines nichtionischen Dispergiermittels und wenigstens ein kationisches Dispergiermittel eingesetzt werden, wobei dessen Menge so bemessen wird, dass das äquivalente Verhältnis von kationischem zu anionischem Dispergiermittel größer 1 ist.

6. Verwendung nach Anspruch 5, **dadurch gekennzeichnet, dass**
a) im Falle des Vorliegens von dispergierten Feststoffteilchen mit einer elektrophoretischen Mobilität mit negativem Vorzeichen, eine Teil- oder die Gesamtmenge des wenigstens einen anionischen Dispergiermittels durch die äquvalente Menge wenigstens eines Monomeren A ersetzt ist, welches wenigstens eine Säuregruppe und/oder deren entsprechendes Anion enthält, und
b) im Falle des Vorliegens von dispergierten Feststoffteilchen mit einer elektrophoretischen Mobilität mit positivem Vorzeichen, eine Teil- oder die Gesamtmenge des wenigstens einen kationischen Dispergiermittels durch die äquvalente Menge wenigstens eines Monomeren B ersetzt ist, welches wenigstens eine Amino-, Amido-, Ureido- oder N-heterocyclische Gruppe und/oder deren am Stickstoff protonierten oder alkylierten Ammoniumderivate enthält.

7. Verwendung nach einem der Ansprüche 4 bis 6, **dadurch gekennzeichnet, dass** das wenigstens eine nichtionische Dispergiermittel vor dem wenigstens einen kationischen und anionischen Dispergiermittel zugegeben wird.

8. Verwendung nach einem der Ansprüche 1 bis 7, **dadurch gekennzeichnet, dass** der wenigstens eine anorganische Feststoff ausgewählt ist aus der Gruppe umfassend Siliziumdioxid, Aluminiumoxid, Hydroxyaluminiumoxid, Calciumcarbonat, Magnesiumcarbonat, Calciumorthophosphat, Magnesiumorthophosphat, Eisen-(II)-oxid, Eisen-(III)-oxid, Eisen-(II/III)-oxid, Zinn-(IV)-oxid, Cer-(IV)-oxid, Yttrium-(III)-oxid, Titandioxid, Hydroxylapatit, Zinkoxid und Zinksulfid.

9. Verwendung nach einem der Ansprüche 1 bis 8, **dadurch gekennzeichnet, dass** der wenigstens eine anorganische Feststoff ein Siliziumdioxid-Sol ist, welches eine elektrophoretische Mobilität mit negativem Vorzeichen aufweist.

## Claims

1. The use of aqueous dispersions of composite particles composed of addition polymer and finely divided inorganic solid and obtainable by free-radical emulsion polymerization of a mixture of ethylenically unsaturated monomers including at least one ethylenically unsaturated alkoxysilane monomer in an aqueous medium in the presence of a dispersely distributed, finely divided inorganic solid and at least one dispersant to prime glasslike substrates, the finely divided inorganic solid being such that the solid particles dispersed in the aqueous reaction medium have a particle diameter ≤ 100 nm and the determination of the particle diameters is made by the method of the analytical ultracentrifuge (on this point cf. S. E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, pages 147 to 175).

2. The use of aqueous dispersions obtainable by blending an addition polymer obtainable by free-radical emulsion polymerization of a mixture of ethylenically unsaturated monomers including at least one ethylenically unsaturated alkoxysilane monomer in an aqueous medium with a dispersely distributed, finely divided inorganic solid in the presence of at least one dispersant to prime glasslike substrates, the finely divided inorganic solid being such that the solid particles dispersed in the aqueous reaction medium have a particle diameter ≤ 100 nm and the determination of the particle diameters is made by the method of the analytical ultracentrifuge (on this point cf. S. E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, pages 147 to 175).

3. The use according to claim 1 or 2, wherein the ethylenically unsaturated alkoxysilane monomers are selected from trialkoxysilanes containing vinyl, acryloyloxy or methacryloyloxy groups as ethylenically unsaturated groups.

4. The use according to claim 1, wherein to prepare the aqueous dispersion polymerization is performed in the presence of at least one anionic, cationic, and nonionic dispersant by the method of free-radical aqueous emulsion polymerization, where
a) a stable aqueous dispersion of the at least one inorganic solid is used which is **characterized in that** at an initial solids concentration of ≥ 1% by weight, based on the aqueous dispersion of the at least one inorganic solid, one hour after its preparation it still contains more than 90% by weight of the originally dispersed solid in dispersed form and its dispersed solid particles have a diameter < 100 nm,
b) the dispersed solid particles of the at least one inorganic solid in an aqueous standard potassium chloride solution at a pH corresponding to the pH of the aqueous reaction medium before addition of the dispersants is commenced exhibit a nonzero electrophoretic mobility,
c) before commencement of the addition of the mixture of the ethylenically unsaturated monomers, at least one anionic, cationic, and nonionic dispersant is added to the aqueous dispersion of solid particles,
d) thereafter from 0.01 to 30% by weight of the total amount of the mixture of the monomers is added to the aqueous dispersion of solid particles and polymerization is performed up to a conversion of at least 90%,
and
e) subsequently the remainder of the mixture of monomers is added under polymerization conditions at the rate at which it is consumed.

5. The use according to claim 4, wherein for the preparation of the aqueous dispersion, based on 100 parts by weight of the mixture of the ethylenically unsaturated monomers, from 1 to 1000 parts by weight of the at least one finely divided inorganic solid are used and wherein, when the dispersed solid particles
a) have an electrophoretic mobility with a negative sign, from 0.01 to 10 parts by weight of at least one cationic dispersant, from 0.01 to 100 parts by weight of at least one nonionic dispersant, and at least one anionic dispersant are used, the amount thereof being such that the equivalent ratio of anionic to cationic dispersant is greater than 1, or
b) have an electrophoretic mobility with a positive sign, from 0.01 to 10 parts by weight of at least one anionic dispersant, from 0.01 to 100 parts by weight of at least one nonionic dispersant, and at least one cationic dispersant are used, the amount thereof being such that the equivalent ratio of cationic to anionic dispersant is greater than 1.

6. The use according to claim 5, wherein
a) where dispersed solid particles having an electrophoretic mobility with a negative sign are present, a portion or all of the at least one anionic dispersant is replaced by the equivalent amount of at least one monomer A containing at least one acid group and/or its corresponding anion, and
b) where dispersed solid particles having an electrophoretic mobility with a positive sign are present, a portion or all of the at least one cationic dispersant is replaced by the equivalent amount of at least one monomer B containing at least one amino, amido, ureido or N-heterocyclic group and/or ammonium derivatives of such a group which are alkylated or protonated on the nitrogen.

7. The use according to any one of claims 4 to 6, wherein the at least one nonionic dispersant is added before the at least one cationic and anionic dispersant.

8. The use according to any one of claims 1 to 7, wherein the at least one inorganic solid is selected from the group encompassing silica, alumina, hydroxyalumina, calcium carbonate, magnesium carbonate, calcium orthophosphate, magnesium orthophosphate, iron(II) oxide, iron(III) oxide, iron(II/III) oxide, tin(IV) oxide, cerium(IV) oxide, yttrium(III) oxide, titanium dioxide, hydroxylapatite, zinc oxide and zinc sulfide.

9. The use according to any one of claims 1 to 8, wherein the at least one inorganic solid is a silica sol having an electrophoretic mobility with a negative sign.

## Revendications

1. Utilisation de dispersions aqueuses de particules composites formées à partir de polymère et de solide inorganique finement divisé, qui peuvent être obtenues par polymérisation par voie radicalaire en émulsion d'un mélange de monomères éthyléniquement insaturés, qui contient au moins un monomère d'alcoxysilane éthyléniquement insaturé, dans un milieu aqueux en présence d'un solide inorganique finement divisé réparti de manière dispersée et d'au moins un dispersant, pour l'apprêt de substrats vitreux, le solide inorganique finement divisé étant conçu de manière telle que les particules solides dispersées dans le milieu de réaction aqueux présentent un diamètre de particule ≤ 100 nm et la détermination du diamètre de particule étant réalisée via le procédé de l'ultracentrifugeuse analytique (cf. dans ce contexte S.E. Harding et al., Analytical Ultracentrifugation in Biochemistry and Polymer Science, Royal Society of Chemistry, Cambridge, Grande Bretagne 1992, chapitre 10, Analysis of Polymer Dispersions with an Eight-Cell-AUC-Multiplexer : High Resolution Particle Size Distribution and Density Gradient Techniques, W. Mächtle, pages 147 à 175).

2. Utilisation de dispersions aqueuses, pouvant être obtenues par mélange d'un polymère, qui peut être obtenu par polymérisation par voie radicalaire en émulsion d'un mélange de monomères éthyléniquement insaturés, qui contient au moins un monomère d'alcoxysilane éthyléniquement insaturé, dans un milieu aqueux, avec un solide inorganique finement divisé réparti de manière dispersée en présence d'au moins un dispersant, pour l'apprêt de substrats vitreux, le solide inorganique finement divisé étant conçu de manière telle que les particules solides dispersées dans le milieu de réaction aqueux présentent un diamètre de particule ≤ 100 nm et la détermination du diamètre de particule étant réalisée via le procédé de l'ultracentrifugeuse analytique (cf. dans ce contexte S.E. Harding et al., Analytical Ultracentrifugation in Biochemistry and Polymer Science, Royal Society of Chemistry, Cambridge, Grande Bretagne 1992, chapitre 10, Analysis of Polymer Dispersions with an Eight-Cell-AUC-Multiplexer : High Resolution Particle Size Distribution and Density Gradient Techniques, W. Mächtle, pages 147 à 175).

3. Utilisation selon la revendication 1 ou 2, **caractérisée en ce que** les monomères d'alcoxysilane éthyléniquement insaturés sont choisis parmi les trialcoxysilanes présentant des groupes vinyle, acryloxy ou méthacryloxy comme groupes éthyléniquement insaturés.

4. Utilisation selon la revendication 1, **caractérisée en ce que**, pour la préparation de la dispersion aqueuse en présence d'au moins un dispersant anionique, cationique et non ionique, on polymérise selon le procédé de la polymérisation par voie radicalaire en émulsion aqueuse,
a) en utilisant une dispersion aqueuse stable dudit au moins un solide inorganique, qui est **caractérisée en ce qu'**elle contient, à une concentration en solide de départ ≥ 1% en poids, par rapport à la dispersion aqueuse dudit au moins un solide inorganique, une heure après sa préparation encore plus de 90% en poids du solide dispersé à l'origine sous forme dispersée et dont les particules solides dispersées présentent un diamètre ≤ 100 nm,
b) les particules solides dispersées dudit au moins un solide inorganique, dans une solution aqueuse de chlorure de potassium standard à un pH qui correspond au pH du milieu de réaction aqueux avant le début de l'addition du dispersant, présentant une mobilité électrophorétique différente de zéro,
c) la dispersion aqueuse de particules solides étant additionnée, avant le début de l'addition du mélange de monomères éthyléniquement insaturés, d'au moins un dispersant anionique, cationique et non ionique,
d) 0,01 à 30% en poids de la quantité totale du mélange de monomères étant ensuite ajoutés à la dispersion aqueuse de particules solides et polymérisés jusqu'à une conversion d'au moins 90% et
e) la quantité résiduelle du mélange des monomères étant ensuite ajoutée en continu dans des conditions de polymérisation en fonction de la consommation.

5. Utilisation selon la revendication 4, **caractérisée en ce qu'**on utilise, pour la préparation de la dispersion aqueuse, par rapport à 100 parties en poids du mélange des monomères éthyléniquement insaturés, 1 à 1000 parties en poids dudit au moins un solide inorganique finement divisé et **en ce qu'**ensuite, lorsque les particules solides dispersées
a) présentent une mobilité électrophorétique dotée d'un signe négatif, on utilise 0,01 à 10 parties en poids d'au moins un dispersant cationique, 0,01 à 100 parties en poids d'au moins un dispersant non ionique et au moins un dispersant anionique, sa quantité étant dimensionnée de manière telle que le rapport d'équivalents de dispersant anionique à dispersant cationique est supérieur à 1, ou
b) présentent une mobilité électrophorétique dotée d'un signe positif, on utilise 0,01 à 10 parties en poids d'au moins un dispersant anionique, 0,01 à 100 parties en poids d'au moins un dispersant non ionique et au moins un dispersant cationique, sa quantité étant dimensionnée de manière telle que le rapport d'équivalents de dispersant cationique à dispersant anionique est supérieur à 1.

6. Utilisation selon la revendication 5, **caractérisée en ce que**
a) dans le cas de la présence de particules solides dispersées présentant une mobilité électrophorétique dotée d'un signe négatif, une quantité partielle ou la quantité totale dudit au moins un dispersant anionique est remplacée par la quantité équivalente d'au moins un monomère A qui contient au moins un groupe acide et/ou son anion correspondant, et
b) dans le cas de la présence de particules solides dispersées présentant une mobilité électrophorétique dotée d'un signe positif, une quantité partielle ou la quantité totale dudit au moins un dispersant cationique est remplacée par la quantité équivalente d'au moins un monomère B qui contient au moins un groupe amino, amido, uréido ou N-hétérocyclique et/ou ses dérivés d'ammonium protonés ou alkylés sur l'azote.

7. Utilisation selon l'une quelconque des revendications 4 à 6, **caractérisée en ce que** ledit au moins un dispersant non ionique est ajouté avant ledit au moins un dispersant cationique et anionique.

8. Utilisation selon l'une quelconque des revendications 1 à 7, **caractérisée en ce que** ledit au moins un solide inorganique est choisi dans le groupe comprenant le dioxyde de silicium, l'oxyde d'aluminium, l'oxyde d'hydroxyaluminium, le carbonate de calcium, le carbonate de magnésium, l'orthophosphate de calcium, l'orthophosphate de magnésium, l'oxyde de fer-(II), l'oxyde de fer-(III), l'oxyde de fer-(II/III), l'oxyde d'étain-(IV), l'oxyde de cérium-(IV), l'oxyde d'yttrium-(III), le dioxyde de titane, l'hydroxyapatite, l'oxyde de zinc et le sulfure de zinc.

9. Utilisation selon l'une quelconque des revendications 1 à 8, **caractérisée en ce que** ledit au moins un solide inorganique est un sol de dioxyde de silicium, qui présente une mobilité électrophorétique dotée d'un signe négatif.
